# EUROPEAN PATENT APPLICATION

(11) **EP 4 447 330 A1**
(43) Date of publication of application: **16.10.2024**
(21) Application number: 22915116.2
(22) Date of filing: 29.12.2022
(51) Int. Cl.: H04B 1/40, H04B 7/155, H04W 72/04

(54) **SIGNAL TRANSMISSION METHOD AND APPARATUS**

(30) Priority: 31.12.2021 CN 202111668436
(71) Applicant: Huawei Technologies Co., Ltd., Shenzhen, Guangdong 518129 (CN)
(72) Inventor: ZENG, Lijun, Shenzhen, Guangdong 518129 (CN); XIONG, Cong, Shenzhen, Guangdong 518129 (CN)
(74) Representative: Gill Jennings & Every LLP
(86) International application number: PCT/CN2022/143638
(87) International publication number: WO 2023/125867

(57) **Abstract**

Embodiments of this application provide a signal transmission method and an apparatus. According to the method provided in this application, a control device determines a serving radio frequency device of a terminal device that performs target uplink transmission, and sends indication information to an extension device. The indication information indicates a radio frequency device that performs the target uplink transmission. The radio frequency device that performs the target uplink transmission is the serving radio frequency device of the terminal device that performs the target uplink transmission. The extension device may report, to the control device based on the indication information, a signal received from the radio frequency device that performs the target uplink transmission. Alternatively, the extension device sends, to the radio frequency device that performs the target uplink transmission, an instruction indicating to perform the target uplink transmission, and/or sends, to a radio frequency device that does not perform the target uplink transmission, an instruction indicating not to perform the target uplink transmission. This helps the control device receive only a signal sent by the radio frequency device that performs the target uplink transmission, to reduce an uplink noise floor.

## Description

This application claims priority to Chinese Patent Application No. 202111668436.4, filed with the China National Intellectual Property Administration on December 31, 2021 and entitled "SIGNAL TRANSMISSION METHOD AND APPARATUS", which is incorporated herein by reference in its entirety.

### TECHNICAL FIELD

Embodiments of this application relate to the communication field, and more specifically, to a signal transmission method and an apparatus.

### BACKGROUND

With development of communication technologies, indoor areas have become areas with large quantities of mobile services. In a current indoor signal coverage technology, a base station uses a three-layer structure: baseband processing unit (baseband unit, BBU)-remote radio unit hub (remote radio unit hub, rHUB)-pico remote radio unit (pico remote radio unit, pRRU). One BBU may be connected to one or more rHUBs, and one rHUB may be connected to a plurality of pRRUs. In a downlink direction, the BBU may perform baseband processing on a downlink signal to be sent to a terminal, and send the processed downlink signal to the rHUB. After receiving the downlink signal, the rHUB duplicates the downlink signal into a plurality of downlink signals, and sends the downlink signals to pRRUs connected to the rHUB. The pRRUs send the downlink signals to the terminal. In an uplink direction, the rHUB combines signals received from the connected pRRUs into one signal, and sends the signal to the BBU. However, transmission performance of the transmission mode is not good enough.

### SUMMARY

Embodiments of this application provide a signal transmission method and an apparatus, to reduce a noise floor of uplink transmission.

According to a first aspect, a signal transmission method is provided. The method includes: An extension device receives indication information from a control device. The indication information indicates at least one radio frequency device that performs target uplink transmission, and the at least one radio frequency device that performs the target uplink transmission is a serving radio frequency device of at least one terminal device that performs the target uplink transmission. The extension device receives a signal from the at least one radio frequency device that performs the target uplink transmission. The extension device sends an uplink signal to the control device. The uplink signal is determined based on a signal received from at least one radio frequency device in the at least one radio frequency device that performs the target uplink transmission.

Based on the foregoing technical solution, the control device sends the indication information to the extension device, to indicate the extension device to report the signal received from the at least one radio frequency device in the at least one radio frequency device that performs the target uplink transmission. In this way, the extension device is prevented from reporting, to the control device, a signal received from a radio frequency device that does not perform the target uplink transmission. The extension device does not report the signal received from the radio frequency device that does not perform the target uplink transmission, to reduce an uplink noise floor and reduce uplink power consumption.

With reference to the first aspect, in some implementations of the first aspect, that the extension device receives a signal from the at least one radio frequency device that performs the target uplink transmission includes: The extension device receives the signal from the at least one radio frequency device that performs the target uplink transmission and a signal from a radio frequency device that does not perform the target uplink transmission.

Based on the foregoing technical solution, even if the extension device receives the signal from the at least one radio frequency device that performs the target uplink transmission and the signal from the radio frequency device that does not perform the target uplink transmission, the extension device may alternatively report, based on the indication information, only the signal received from the at least one radio frequency device in the at least one radio frequency device that performs the target uplink transmission, to prevent the extension device from reporting, to the control device, the signal received from the radio frequency device that does not perform the target uplink transmission.

With reference to the first aspect, in some implementations of the first aspect, that the extension device receives a signal from the at least one radio frequency device that performs the target uplink transmission includes: The extension device receives only the signal from the at least one radio frequency device that performs the target uplink transmission.

With reference to the first aspect, in some implementations of the first aspect, the method further includes: The extension device sends, to the at least one radio frequency device that performs the target uplink transmission, an instruction indicating to perform the target uplink transmission, and/or sends, to the radio frequency device that does not perform the target uplink transmission, an instruction indicating not to perform the target uplink transmission.

Based on the foregoing technical solution, the control device sends the indication information to the extension device, so that the extension device can send, to the radio frequency device that performs the target uplink transmission, the instruction indicating to perform the target uplink transmission, and/or send, to the radio frequency device that does not perform the target uplink transmission, the instruction indicating not to perform the target uplink transmission. In this way, only the radio frequency device that performs the target uplink transmission sends the signal to the extension device, to prevent the extension device from reporting, to the control device, a signal received from the radio frequency device that does not perform the target uplink transmission. The extension device does not report the signal received from the radio frequency device that does not perform the target uplink transmission, to reduce an uplink noise floor and reduce uplink power consumption.

With reference to the first aspect, in some implementations of the first aspect, the indication information indicates at least one radio frequency device that performs uplink transmission in at least one time unit, the at least one time unit includes a target time unit for performing the target uplink transmission, and the at least one radio frequency device that performs the uplink transmission in the at least one time unit is a serving radio frequency device of at least one terminal device that performs the uplink transmission in the at least one time unit.

With reference to the first aspect, in some implementations of the first aspect, power of the signal received from the at least one radio frequency device in the at least one radio frequency device that performs the target uplink transmission is greater than a power threshold.

Based on the foregoing technical solution, a signal whose power is less than or equal to the power threshold may be a noise floor generated by a radio frequency device. Therefore, when the power of the signal reported by the extension device to the control device is greater than the power threshold, this helps reduce an uplink noise floor.

With reference to the first aspect, in some implementations of the first aspect, the method further includes: The extension device detects power of the signal received from the at least one radio frequency device that performs the target uplink transmission.

With reference to the first aspect, in some implementations of the first aspect, the indication information further indicates a radio frequency device that performs target downlink transmission, the radio frequency device that performs the target downlink transmission is a serving radio frequency device of a terminal device that performs the target downlink transmission, and the method further includes: The extension device receives a downlink signal from the control device. The extension device sends the downlink signal to the radio frequency device that performs the target downlink transmission.

Based on the foregoing technical solution, the control device sends the indication information to the extension device, to indicate the extension device to send the downlink signal to the radio frequency device that performs the target downlink transmission, so that only the radio frequency device that performs the target downlink transmission can receive the downlink signal. When a radio frequency device that does not perform the target downlink transmission cannot receive the downlink signal, invalid sending can be avoided, and downlink power consumption can be reduced. If the radio frequency device that does not perform the target downlink transmission is adjacent to another cell, interference to the neighboring cell can be further avoided.

With reference to the first aspect, in some implementations of the first aspect, the indication information further indicates a radio frequency device that performs target downlink transmission, the radio frequency device that performs the target downlink transmission is a serving radio frequency device of a terminal device that performs the target downlink transmission, and the method further includes: The extension device sends, to the radio frequency device that performs the target downlink transmission, an instruction indicating to perform the target downlink transmission, and/or sends, to a radio frequency device that does not perform the target downlink transmission, an instruction indicating not to perform the target downlink transmission. The extension device receives a downlink signal from the control device. The extension device sends the downlink signal to the radio frequency device that performs the target downlink transmission.

Based on the foregoing technical solution, the control device sends the indication information to the extension device, so that the extension device can send, to the radio frequency device that performs the target downlink transmission, the instruction indicating to perform the target downlink transmission, and/or sends, to the radio frequency device that does not perform the target downlink transmission, the instruction indicating not to perform the target downlink transmission, so that only the radio frequency device that performs the target downlink transmission can send the downlink signal. When the radio frequency device that does not perform the target downlink transmission does not send the downlink signal, invalid sending can be avoided, and downlink power consumption can be reduced. If the radio frequency device that does not perform the target downlink transmission is adjacent to another cell, interference to the neighboring cell can be further avoided.

With reference to the first aspect, in some implementations of the first aspect, the indication information further indicates at least one radio frequency device that performs downlink transmission in at least one time unit, the at least one time unit includes a target time unit for performing the target downlink transmission, and the at least one radio frequency device that performs the downlink transmission in the at least one time unit is a serving radio frequency device of a terminal device that performs the downlink transmission in the at least one time unit.

According to a second aspect, a signal transmission method is provided. The method includes: A radio frequency device receives an instruction sent by an extension device. The instruction indicates whether to perform target uplink transmission. The radio frequency device determines, according to the instruction, whether to perform the target uplink transmission.

Based on the foregoing technical solution, the radio frequency device determines, according to the instruction, whether to perform the target uplink transmission. This helps only a serving radio frequency device of a terminal device that performs the target uplink transmission perform the target uplink transmission. If a serving radio frequency device of a terminal device that does not perform the target uplink transmission does not perform the target uplink transmission, an uplink noise floor may be reduced, and uplink power consumption may be reduced.

With reference to the second aspect, in some implementations of the second aspect, the instruction indicates whether to perform uplink transmission in at least one time unit, and the at least one time unit includes a target time unit for performing the target uplink transmission.

With reference to the second aspect, in some implementations of the second aspect, the radio frequency device determines, according to the instruction, not to perform the target uplink transmission, and the method further includes: The radio frequency device performs at least one of the following: disabling an uplink radio frequency channel, disabling a power amplifier, disabling a low noise amplifier, disabling an interface between the radio frequency device and the extension device, clearing data for the interface between the radio frequency device and the extension device, and disabling a downlink radio frequency channel.

Based on the foregoing technical solution, when determining not to perform the target uplink transmission, the radio frequency device performs one or more of the foregoing operations, so that power consumption of the radio frequency device can be reduced.

With reference to the second aspect, in some implementations of the second aspect, the radio frequency device determines, according to the instruction, to perform the target uplink transmission, and the method further includes: The radio frequency device performs at least one of the following: enabling the uplink radio frequency channel, enabling the power amplifier, enabling the low noise amplifier, enabling the interface between the radio frequency device and the extension device, and enabling the downlink radio frequency channel.

With reference to the second aspect, in some implementations of the second aspect, the determining, according to the instruction, whether to perform the target uplink transmission includes: determining, based on the instruction and power of a to-be-sent signal, whether to perform the target uplink transmission; and if the instruction indicates to perform the target uplink transmission, but the power of the to-be-sent signal is less than or equal to a power threshold, determining, by the radio frequency device, not to perform the target uplink transmission; or if the instruction indicates not to perform the target uplink transmission, but the power of the to-be-sent signal is greater than a power threshold, determining, by the radio frequency device, to perform the target uplink transmission.

It may be understood that if the radio frequency device determines not to perform the target uplink transmission, the radio frequency device does not send the to-be-sent signal to the extension device. If the radio frequency device determines to perform the target uplink transmission, the radio frequency device sends the to-be-sent signal to the extension device.

Based on the foregoing technical solution, because a signal whose power is less than or equal to the power threshold may be a noise floor generated by the radio frequency device, the target uplink transmission is not performed when the power of the to-be-sent signal is less than or equal to the power threshold. This helps reduce the uplink noise floor.

With reference to the second aspect, in some implementations of the second aspect, the instruction further indicates whether to perform target downlink transmission, and the method further includes: The radio frequency device determines, according to the instruction, whether to perform the target downlink transmission.

Based on the foregoing technical solution, the radio frequency device determines, according to the instruction, whether to perform the target downlink transmission. This helps only a serving radio frequency device of a terminal device that performs the target downlink transmission perform the target downlink transmission. If a radio frequency device that does not perform the target downlink transmission does not perform the target downlink transmission, invalid sending can be avoided, and downlink power consumption can be reduced. If the radio frequency device that does not perform the target downlink transmission is adjacent to another cell, interference to the neighboring cell can be further avoided.

With reference to the second aspect, in some implementations of the second aspect, the instruction indicates whether to perform downlink transmission in at least one time unit, and the at least one time unit includes a target time unit for performing the target uplink transmission.

With reference to the second aspect, in some implementations of the second aspect, the radio frequency device determines, according to the instruction, not to perform the target downlink transmission, and the method further includes: The radio frequency device disables at least one of the following: the downlink radio frequency channel, the power amplifier, the low noise amplifier, the interface between the radio frequency device and the extension device, and the uplink radio frequency channel.

Based on the foregoing technical solution, when determining not to perform the target downlink transmission, the radio frequency device performs one or more of the foregoing operations, so that power consumption of the radio frequency device can be reduced.

With reference to the second aspect, in some implementations of the second aspect, the radio frequency device determines, according to the instruction, to perform the target downlink transmission, and the method further includes: The radio frequency device enables at least one of the following: the downlink radio frequency channel, the power amplifier, the low noise amplifier, the uplink radio frequency channel, and the interface between the radio frequency device and the extension device.

According to a third aspect, a signal transmission method is provided. The method includes: A control device determines a serving radio frequency device of at least one terminal device that performs target uplink transmission. The control device sends indication information to an extension device. The indication information indicates at least one radio frequency device that performs the target uplink transmission, and the at least one radio frequency device that performs the target uplink transmission is the serving radio frequency device of the at least one terminal device that performs the target uplink transmission.

Based on the foregoing technical solution, the control device determines the serving radio frequency device of the terminal device that performs the target uplink transmission, and sends the indication information to the extension device. The extension device may report, to the control device based on the indication information, a signal received from the radio frequency device that performs the target uplink transmission. Alternatively, the extension device sends, to the radio frequency device that performs the target uplink transmission, an instruction indicating to perform the target uplink transmission, and/or sends, to a radio frequency device that does not perform the target uplink transmission, an instruction indicating not to perform the target uplink transmission. This helps the control device receive only the signal sent by the radio frequency device that performs the target uplink transmission, to reduce an uplink noise floor.

With reference to the third aspect, in some implementations of the third aspect, that a control device determines a serving radio frequency device of at least one terminal device that performs target uplink transmission includes: The control device determines a serving radio frequency device of at least one terminal device that performs uplink transmission in at least one time unit. The at least one time unit includes a target time unit for performing the target uplink transmission. The indication information indicates at least one radio frequency device that performs the uplink transmission in the at least one time unit, and the at least one radio frequency device that performs the uplink transmission in the at least one time unit is the serving radio frequency device of the at least one terminal device that performs the uplink transmission in the at least one time unit.

With reference to the third aspect, in some implementations of the third aspect, the method further includes: The control device determines, based on power of an uplink signal received by each radio frequency device from the terminal device that performs the target uplink transmission, the serving radio frequency device of the terminal device that performs the target uplink transmission.

With reference to the third aspect, in some implementations of the third aspect, the method further includes: The control device determines, based on power of a downlink signal received from each radio frequency device by the terminal device that performs the target uplink transmission, the serving radio frequency device of the terminal device that performs the target uplink transmission.

With reference to the third aspect, in some implementations of the third aspect, the method further includes: The control device determines a serving radio frequency device of at least one terminal device that performs target downlink transmission. The indication information further indicates at least one radio frequency device that performs the target downlink transmission, and the at least one radio frequency device that performs the target downlink transmission is the serving radio frequency device of the at least one terminal device that performs the target downlink transmission.

Based on the foregoing technical solution, the control device determines the serving radio frequency device of the terminal device that performs the target downlink transmission, and sends the indication information to the extension device. The extension device may send, based on the indication information, a downlink signal to the radio frequency device that performs the target downlink transmission. Alternatively, the extension device sends, to the radio frequency device that performs the target downlink transmission, an instruction indicating to perform the target downlink transmission, and/or sends, to a radio frequency device that does not perform the target downlink transmission, an instruction indicating not to perform the target downlink transmission. This helps the radio frequency device that does not perform the target downlink transmission does not send a downlink signal, to avoid invalid sending, and reduce downlink power consumption.

With reference to the third aspect, in some implementations of the third aspect, that the control device determines a serving radio frequency device of at least one terminal device that performs target downlink transmission includes: The control device determines a serving radio frequency device of at least one terminal device that performs downlink transmission in at least one time unit. The at least one time unit includes a target time unit for performing the target downlink transmission. The indication information indicates at least one radio frequency device that performs the downlink transmission in the at least one time unit, and the at least one radio frequency device that performs the downlink transmission in the at least one time unit is the serving radio frequency device of the at least one terminal device that performs the downlink transmission in the at least one time unit.

With reference to the third aspect, in some implementations of the third aspect, the method further includes: The control device sends the indication information to the radio frequency device via the extension device.

Based on the foregoing technical solution, the control device sends the indication information to the radio frequency device via the extension device, so that the radio frequency device may determine, according to the indication, whether to perform the target downlink transmission. This helps only the serving radio frequency device of the terminal device that performs the target downlink transmission perform the target downlink transmission, to avoid invalid sending, and reduce downlink power consumption. When the control device sends the indication information to the radio frequency device via the extension device, the extension device does not need to parse the indication information, so that processing burden of the extension device is not increased.

According to a fourth aspect, a signal transmission method is provided. The method includes: A control device determines at least one serving radio frequency device of a plurality of terminal devices. The control device determines indication information based on the at least one serving radio frequency device of the plurality of terminal devices. The indication information indicates a radio frequency device that performs target signal transmission, and the target signal transmission includes target uplink transmission and/or target downlink transmission. The control device sends the indication information to an extension device. The control device schedules at least one terminal device served by the radio frequency device that performs the target signal transmission to perform the target signal transmission.

Based on the foregoing technical solution, the control device indicates, by using the indication information, the radio frequency device that performs the target signal transmission, and schedules the terminal device served by the radio frequency device that performs the target signal transmission to perform the target signal transmission, to improve signal transmission performance.

For example, for downlink transmission, the control device does not schedule a terminal device served by a radio frequency device that does not perform the target downlink transmission to perform the target downlink transmission. Therefore, invalid sending can be avoided when the radio frequency device that does not perform the target downlink transmission does not send a downlink signal.

For another example, for uplink transmission, the control device does not schedule a terminal device served by a radio frequency device that does not perform the target uplink transmission. Therefore, a signal sent by the radio frequency device that does not perform the target uplink transmission to the extension device is a noise floor generated by the radio frequency device. Therefore, the extension device reports only a signal received from the radio frequency device that performs the target uplink transmission, so that the uplink noise floor can be reduced.

In addition, if the radio frequency device that performs the target signal transmission and that is indicated by the indication information is a part of a plurality of radio frequency devices connected to the extension device, power consumption can be reduced when only the existing part of the radio frequency devices perform the target signal transmission.

With reference to the fourth aspect, in some implementations of the fourth aspect, the indication information indicates a radio frequency device that performs signal transmission in at least one time unit, and the at least one time unit includes a target time unit for performing the target signal transmission.

With reference to the fourth aspect, in some implementations of the fourth aspect, the radio frequency device that performs the target signal transmission includes a radio frequency device, where a quantity of terminal devices served by the radio frequency device exceeds a threshold.

Based on the foregoing technical solution, the control device determines the radio frequency device as the radio frequency device that performs the target signal transmission, where the quantity of terminal devices served by the radio frequency device exceeds the threshold, to reduce power consumption while ensuring that a communication service is provided for most terminal devices.

With reference to the fourth aspect, in some implementations of the fourth aspect, the radio frequency device that performs the target signal transmission includes a radio frequency device that serves a largest quantity of terminal devices.

Based on the foregoing technical solution, the control device determines the radio frequency device that serves the largest quantity of terminal devices as the radio frequency device that performs the target signal transmission, to reduce power consumption while ensuring that a communication service is provided for most terminal devices.

With reference to the fourth aspect, in some implementations of the fourth aspect, a first radio frequency device is a radio frequency device that performs uplink transmission in M time units in the at least one time unit, and a second radio frequency device is a radio frequency device that performs the uplink transmission in N time units in the at least one time unit. A quantity of terminal devices served by the first radio frequency device is greater than a quantity of terminal devices served by the second radio frequency device, M and N are positive integers, and M>N.

Based on the foregoing technical solution, a radio frequency device serving a larger quantity of terminal devices can perform the target signal transmission in more time units, to reduce power consumption while ensuring that a communication service is provided for most terminal devices.

With reference to the fourth aspect, in some implementations of the fourth aspect, the method further includes: The control device determines the serving radio frequency device of the terminal device based on power of an uplink signal received by each radio frequency device from the terminal device.

With reference to the fourth aspect, in some implementations of the fourth aspect, the method further includes: The control device determines the serving radio frequency device of the terminal device based on power of a downlink signal received by the terminal device from each radio frequency device.

According to a fifth aspect, a signal transmission method is provided. The method includes: An extension device receives a signal from a radio frequency device. If power of the signal is greater than a power threshold, the extension device sends the signal to a control device; or if power of the signal is less than or equal to a power threshold, the extension device does not send the signal to the control device.

Based on the foregoing technical solution, a signal whose power is less than or equal to the power threshold may be a noise floor generated by the radio frequency device. Therefore, when the power of the signal reported by the extension device to the control device is greater than the power threshold, this helps reduce an uplink noise floor.

With reference to the fifth aspect, in some implementations of the fifth aspect, the power of the signal is greater than the power threshold, and the method further includes: The extension device receives a downlink signal from the control device. The extension device sends the downlink signal to the radio frequency device.

According to a sixth aspect, a signal transmission method is provided. The method includes: A radio frequency device determines whether power of a to-be-sent signal is greater than a power threshold. If the power of the to-be-sent signal is greater than the power threshold, the radio frequency device sends the to-be-sent signal to an extension device; or if the power of the to-be-sent signal is less than or equal to the power threshold, the radio frequency device does not send the to-be-sent signal to an extension device.

Based on the foregoing technical solution, a signal whose power is less than or equal to the power threshold may be a noise floor generated by the radio frequency device. Therefore, when the power of the to-be-sent signal is less than or equal to the power threshold, the to-be-sent signal is not sent to the extension device. This helps reduce an uplink noise floor.

With reference to the sixth aspect, in some implementations of the sixth aspect, the radio frequency device does not send the to-be-sent signal to the extension device, and the method further includes: The radio frequency device performs at least one of the following operations: disabling an uplink radio frequency channel, disabling a power amplifier, disabling a low noise amplifier, disabling a downlink radio frequency channel, disabling an interface between the radio frequency device and the extension device, and clearing interface data.

Based on the foregoing technical solution, if the power of the to-be-sent signal is less than or equal to the power threshold, it indicates that the to-be-sent signal may be noise generated by the radio frequency device instead of uplink data received from a terminal device. Since the radio frequency device does not receive uplink data from the terminal device, it indicates that no terminal device may exist in a coverage area of the radio frequency device. When no terminal device exists in the coverage area of the radio frequency device, the radio frequency device may not work. Therefore, performing one or more of the foregoing operations can reduce energy consumption.

According to a seventh aspect, a signal transmission method is provided. The method includes: An extension device receives indication information from a control device. The indication information indicates a radio frequency device that performs target downlink transmission, and the radio frequency device that performs the target downlink transmission is a serving radio frequency device of a terminal device that performs the target downlink transmission. The extension device receives a downlink signal from the control device. The extension device sends the downlink signal to the radio frequency device that performs the target downlink transmission.

Based on the foregoing technical solution, the control device sends the indication information to the extension device, to indicate the extension device to send the downlink signal to the radio frequency device that performs the target downlink transmission, so that only the radio frequency device that performs the target downlink transmission can receive the downlink signal. When a radio frequency device that does not perform the target downlink transmission cannot receive the downlink signal, invalid sending can be avoided, and downlink power consumption can be reduced. If the radio frequency device that does not perform the target downlink transmission is adjacent to another cell, interference to the neighboring cell can be further avoided.

With reference to the seventh aspect, in some implementations of the seventh aspect, the indication information further indicates at least one radio frequency device that performs downlink transmission in at least one time unit, the at least one time unit includes a target time unit for performing the target downlink transmission, and the at least one radio frequency device that performs the downlink transmission in the at least one time unit is a serving radio frequency device of a terminal device that performs the downlink transmission in the at least one time unit.

According to an eighth aspect, a signal transmission method is provided. The method includes: An extension device receives indication information from a control device. The indication information indicates a radio frequency device that performs target downlink transmission, and the radio frequency device that performs the target downlink transmission is a serving radio frequency device of a terminal device that performs the target downlink transmission. The extension device sends, to the radio frequency device that performs the target downlink transmission, an instruction indicating to perform the target downlink transmission, and/or sends, to a radio frequency device that does not perform the target downlink transmission, an instruction indicating not to perform the target downlink transmission. The extension device receives a downlink signal from the control device. The extension device sends the downlink signal to the radio frequency device that performs the target downlink transmission.

Based on the foregoing technical solution, the control device sends the indication information to the extension device, so that the extension device can send, to the radio frequency device that performs the target downlink transmission, the instruction indicating to perform the target downlink transmission, and/or send, to the radio frequency device that does not perform the target downlink transmission, the instruction indicating not to perform the target downlink transmission, so that only the radio frequency device that performs the target downlink transmission can send the downlink signal. When the radio frequency device that does not perform the target downlink transmission does not send the downlink signal, invalid sending can be avoided, and downlink power consumption can be reduced. If the radio frequency device that does not perform the target downlink transmission is adjacent to another cell, interference to the neighboring cell can be further avoided.

With reference to the eighth aspect, in some implementations of the eighth aspect, the indication information further indicates at least one radio frequency device that performs downlink transmission in at least one time unit, the at least one time unit includes a target time unit for performing the target downlink transmission, and the at least one radio frequency device that performs the downlink transmission in the at least one time unit is a serving radio frequency device of a terminal device that performs the downlink transmission in the at least one time unit.

According to a ninth aspect, a signal transmission method is provided. The method includes: A radio frequency device receives an instruction sent by an extension device. The instruction indicates whether to perform target downlink transmission. The radio frequency device determines, according to the instruction, whether to perform the target downlink transmission.

Based on the foregoing technical solution, the radio frequency device determines, according to the instruction, whether to perform the target downlink transmission. This helps only a serving radio frequency device of a terminal device that performs the target downlink transmission perform the target downlink transmission. When a radio frequency device that does not perform the target downlink transmission does not perform the target downlink transmission, invalid sending can be avoided, and downlink power consumption can be reduced. If the radio frequency device that does not perform the target downlink transmission is adjacent to another cell, interference to the neighboring cell can be further avoided.

With reference to the ninth aspect, in some implementations of the ninth aspect, the instruction indicates whether to perform downlink transmission in at least one time unit, and the at least one time unit includes a target time unit for performing the target uplink transmission.

With reference to the ninth aspect, in some implementations of the ninth aspect, the radio frequency device determines, according to the instruction, not to perform the target downlink transmission, and the method further includes: The radio frequency device disables at least one of the following: a downlink radio frequency channel, a power amplifier, a low noise amplifier, an interface between the radio frequency device and the extension device, and an uplink radio frequency channel.

Based on the foregoing technical solution, when determining not to perform the target downlink transmission, the radio frequency device performs one or more of the foregoing operations, so that power consumption of the radio frequency device can be reduced.

With reference to the ninth aspect, in some implementations of the ninth aspect, the radio frequency device determines, according to the instruction, to perform the target downlink transmission, and the method further includes: The radio frequency device enables at least one of the following: a downlink radio frequency channel, a power amplifier, a low noise amplifier, an uplink radio frequency channel, and an interface between the radio frequency device and the extension device.

According to a tenth aspect, a signal transmission method is provided. The method includes: A control device determines a serving radio frequency device of at least one terminal device that performs target downlink transmission. The control device sends indication information to an extension device. The indication information indicates at least one radio frequency device that performs the target downlink transmission, and the at least one radio frequency device that performs the target downlink transmission is the serving radio frequency device of the at least one terminal device that performs the target downlink transmission.

Based on the foregoing technical solution, the control device determines the serving radio frequency device of the terminal device that performs the target downlink transmission, and sends the indication information to the extension device. The extension device may send, based on the indication information, a downlink signal to the radio frequency device that performs the target downlink transmission. Alternatively, the extension device sends, to the radio frequency device that performs the target downlink transmission, an instruction indicating to perform the target downlink transmission, and/or sends, to a radio frequency device that does not perform the target downlink transmission, an instruction indicating not to perform the target downlink transmission. This helps the radio frequency device that does not perform the target downlink transmission not send a downlink signal, to avoid invalid sending, and reduce downlink power consumption.

With reference to the tenth aspect, in some implementations of the tenth aspect, that a control device determines a serving radio frequency device of at least one terminal device that performs target downlink transmission includes: The control device determines a serving radio frequency device of at least one terminal device that performs downlink transmission in at least one time unit. The at least one time unit includes a target time unit for performing the target downlink transmission. The indication information indicates at least one radio frequency device that performs the downlink transmission in the at least one time unit, and the at least one radio frequency device that performs the downlink transmission in the at least one time unit is the serving radio frequency device of the at least one terminal device that performs the downlink transmission in the at least one time unit.

According to an eleventh aspect, an apparatus is provided. The apparatus includes a transceiver unit. The transceiver unit is configured to receive indication information from a control device. The indication information indicates at least one radio frequency device that performs target uplink transmission, and the at least one radio frequency device that performs the target uplink transmission is a serving radio frequency device of at least one terminal device that performs the target uplink transmission. The transceiver unit is further configured to receive a signal from the at least one radio frequency device that performs the target uplink transmission. The transceiver unit is further configured to send an uplink signal to the control device. The uplink signal is determined based on a signal received from at least one radio frequency device in the at least one radio frequency device that performs the target uplink transmission.

With reference to the eleventh aspect, in some implementations of the eleventh aspect, the transceiver unit is further configured to receive the signal from the at least one radio frequency device that performs the target uplink transmission and a signal from a radio frequency device that does not perform the target uplink transmission.

With reference to the eleventh aspect, in some implementations of the eleventh aspect, the transceiver unit is further configured to receive only the signal from the at least one radio frequency device that performs the target uplink transmission.

With reference to the eleventh aspect, in some implementations of the eleventh aspect, the transceiver unit is further configured to: send, to the at least one radio frequency device that performs the target uplink transmission, an instruction indicating to perform the target uplink transmission; and/or send, to the radio frequency device that does not perform the target uplink transmission, an instruction indicating not to perform the target uplink transmission.

With reference to the eleventh aspect, in some implementations of the eleventh aspect, the indication information indicates at least one radio frequency device that performs uplink transmission in at least one time unit, the at least one time unit includes a target time unit for performing the target uplink transmission, and the at least one radio frequency device that performs the uplink transmission in the at least one time unit is a serving radio frequency device of at least one terminal device that performs the uplink transmission in the at least one time unit.

With reference to the eleventh aspect, in some implementations of the eleventh aspect, power of the signal received from the at least one radio frequency device in the at least one radio frequency device that performs the target uplink transmission is greater than a power threshold.

With reference to the eleventh aspect, in some implementations of the eleventh aspect, the apparatus further includes a processing unit, and the processing unit is configured to detect power of the signal received from the at least one radio frequency device that performs the target uplink transmission.

With reference to the eleventh aspect, in some implementations of the eleventh aspect, the indication information further indicates a radio frequency device that performs target downlink transmission, and the radio frequency device that performs the target downlink transmission is a serving radio frequency device of a terminal device that performs the target downlink transmission. The transceiver unit is further configured to receive a downlink signal from the control device. The transceiver unit is further configured to send the downlink signal to the radio frequency device that performs the target downlink transmission.

With reference to the eleventh aspect, in some implementations of the eleventh aspect, the indication information further indicates a radio frequency device that performs target downlink transmission, and the radio frequency device that performs the target downlink transmission is a serving radio frequency device of a terminal device that performs the target downlink transmission. The transceiver unit is further configured to: send, to the radio frequency device that performs the target downlink transmission, an instruction indicating to perform the target downlink transmission, and/or send, to a radio frequency device that does not perform the target downlink transmission, an instruction indicating not to perform the target downlink transmission. The transceiver unit is further configured to receive a downlink signal from the control device. The transceiver unit is further configured to send the downlink signal to the radio frequency device that performs the target downlink transmission.

With reference to the eleventh aspect, in some implementations of the eleventh aspect, the indication information further indicates at least one radio frequency device that performs downlink transmission in at least one time unit, the at least one time unit includes a target time unit for performing the target downlink transmission, and the at least one radio frequency device that performs the downlink transmission in the at least one time unit is a serving radio frequency device of a terminal device that performs the downlink transmission in the at least one time unit.

According to a twelfth aspect, an apparatus is provided. The apparatus includes a transceiver unit and a processing unit. The transceiver unit is configured to receive an instruction sent by an extension device. The instruction indicates whether to perform target uplink transmission. The processing unit is configured to determine, according to the instruction, whether to perform the target uplink transmission.

With reference to the twelfth aspect, in some implementations of the twelfth aspect, the instruction indicates whether to perform uplink transmission in at least one time unit, and the at least one time unit includes a target time unit for performing the target uplink transmission.

With reference to the twelfth aspect, in some implementations of the twelfth aspect, the processing unit is further configured to: disable an uplink radio frequency channel, disable a power amplifier, disable a low noise amplifier, disable an interface between a radio frequency device and the extension device, clear interface data between the radio frequency device and the extension device, and disable a downlink radio frequency channel.

With reference to the twelfth aspect, in some implementations of the twelfth aspect, the processing unit is further configured to: enable an uplink radio frequency channel, enable a power amplifier, enable a low noise amplifier, enable an interface between a radio frequency device and the extension device, and enable a downlink radio frequency channel.

With reference to the twelfth aspect, in some implementations of the twelfth aspect, the processing unit is further configured to determine, based on the instruction and power of a to-be-sent signal, whether to perform the target uplink transmission; and if the instruction indicates to perform the target uplink transmission, but the power of the to-be-sent signal is less than or equal to a power threshold, determine not to perform the target uplink transmission; or if the instruction indicates not to perform the target uplink transmission, but the power of the to-be-sent signal is greater than a power threshold, determine to perform the target uplink transmission.

With reference to the twelfth aspect, in some implementations of the twelfth aspect, the instruction further indicates whether to perform the target downlink transmission, and the processing unit is further configured to determine, according to the instruction, whether to perform the target downlink transmission.

With reference to the twelfth aspect, in some implementations of the twelfth aspect, the instruction indicates whether to perform downlink transmission in at least one time unit, and the at least one time unit includes a target time unit for performing the target uplink transmission.

With reference to the twelfth aspect, in some implementations of the twelfth aspect, the processing unit is further configured to disable at least one of the following: a downlink radio frequency channel, a power amplifier, a low noise amplifier, an interface between a radio frequency device and the extension device, and an uplink radio frequency channel.

With reference to the twelfth aspect, in some implementations of the twelfth aspect, the processing unit is further configured to enable at least one of the following: a downlink radio frequency channel, a power amplifier, a low noise amplifier, an uplink radio frequency channel, and an interface between a radio frequency device and the extension device.

According to a thirteenth aspect, an apparatus is provided. The apparatus includes a transceiver unit and a processing unit. The processing unit is configured to determine a serving radio frequency device of at least one terminal device that performs target uplink transmission. The transceiver unit is configured to send indication information to an extension device. The indication information indicates at least one radio frequency device that performs the target uplink transmission, and the at least one radio frequency device that performs the target uplink transmission is the serving radio frequency device of the at least one terminal device that performs the target uplink transmission.

With reference to the thirteenth aspect, in some implementations of the thirteenth aspect, the processing unit is further configured to determine a serving radio frequency device of at least one terminal device that performs uplink transmission in at least one time unit. The at least one time unit includes a target time unit for performing the target uplink transmission. The indication information indicates at least one radio frequency device that performs the uplink transmission in the at least one time unit, and the at least one radio frequency device that performs the uplink transmission in the at least one time unit is the serving radio frequency device of the at least one terminal device that performs the uplink transmission in the at least one time unit.

With reference to the thirteenth aspect, in some implementations of the thirteenth aspect, the processing unit is further configured to determine, based on power of an uplink signal received by each radio frequency device from the terminal device that performs the target uplink transmission, the serving radio frequency device of the terminal device that performs the target uplink transmission.

With reference to the thirteenth aspect, in some implementations of the thirteenth aspect, the processing unit is further configured to determine, based on power of a downlink signal received from each radio frequency device by the terminal device that performs the target uplink transmission, the serving radio frequency device of the terminal device that performs the target uplink transmission.

With reference to the thirteenth aspect, in some implementations of the thirteenth aspect, the processing unit is further configured to determine a serving radio frequency device of at least one terminal device that performs target downlink transmission. The indication information further indicates at least one radio frequency device that performs the target downlink transmission, and the at least one radio frequency device that performs the target downlink transmission is the serving radio frequency device of the at least one terminal device that performs the target downlink transmission.

With reference to the thirteenth aspect, in some implementations of the thirteenth aspect, the processing unit is further configured to determine a serving radio frequency device of at least one terminal device that performs downlink transmission in at least one time unit. The at least one time unit includes a target time unit for performing the target downlink transmission. The indication information indicates at least one radio frequency device that performs downlink transmission in the at least one time unit. The at least one radio frequency device that performs the downlink transmission in the at least one time unit is the serving radio frequency device of the at least one terminal device that performs the downlink transmission in the at least one time unit.

With reference to the thirteenth aspect, in some implementations of the thirteenth aspect, the transceiver unit is further configured to send the indication information to the radio frequency device via the extension device.

According to a fourteenth aspect, an apparatus is provided. The apparatus includes a transceiver unit and a processing unit. The processing unit is configured to determine at least one serving radio frequency device of a plurality of terminal devices. The processing unit is further configured to determine indication information based on the at least one serving radio frequency device of the plurality of terminal devices. The indication information indicates a radio frequency device that performs target signal transmission, and the target signal transmission includes target uplink transmission and/or target downlink transmission. The transceiver unit is configured to send the indication information to an extension device. The processing unit is further configured to schedule at least one terminal device served by the radio frequency device that performs the target signal transmission to perform the target signal transmission.

With reference to the fourteenth aspect, in some implementations of the fourteenth aspect, the indication information indicates a radio frequency device that performs signal transmission in at least one time unit, and the at least one time unit includes a target time unit for performing the target signal transmission.

With reference to the fourteenth aspect, in some implementations of the fourteenth aspect, the radio frequency device that performs the target signal transmission includes a radio frequency device, where a quantity of terminal devices served by the radio frequency device exceeds a threshold.

With reference to the fourteenth aspect, in some implementations of the fourteenth aspect, the radio frequency device that performs the target signal transmission includes a radio frequency device that serves a largest quantity of terminal devices.

With reference to the fourteenth aspect, in some implementations of the fourteenth aspect, a first radio frequency device is a radio frequency device that performs uplink transmission in M time units in the at least one time unit, and a second radio frequency device is a radio frequency device that performs the uplink transmission in N time units in the at least one time unit. A quantity of terminal devices served by the first radio frequency device is greater than a quantity of terminal devices served by the second radio frequency device, M and N are positive integers, and M>N.

With reference to the fourteenth aspect, in some implementations of the fourteenth aspect, the processing unit is further configured to determine the serving radio frequency device of the terminal device based on power of an uplink signal received by each radio frequency device from the terminal device.

With reference to the fourteenth aspect, in some implementations of the fourteenth aspect, the processing unit is further configured to determine the serving radio frequency device of the terminal device based on power of a downlink signal received by the terminal device from each radio frequency device.

According to a fifteenth aspect, an apparatus is provided. The apparatus includes a transceiver unit and a processing unit. The transceiver unit is configured to receive a signal from a radio frequency device. If power of the signal is greater than a power threshold, the transceiver unit is further configured to send the signal to a control device; or if the power of the signal is less than or equal to the power threshold, the transceiver unit is not configured to send the signal to the control device.

With reference to the fifteenth aspect, in some implementations of the fifteenth aspect, the power of the signal is greater than the power threshold, and the transceiver unit is further configured to receive a downlink signal from the control device; and the transceiver unit is further configured to send the downlink signal to the radio frequency device.

According to a sixteenth aspect, an apparatus is provided. The apparatus includes a transceiver unit and a processing unit. The processing unit is configured to determine whether power of a to-be-sent signal is greater than a power threshold. If the power of the to-be-sent signal is greater than the power threshold, the transceiver unit is configured to send the to-be-sent signal to an extension device; or if power of the to-be-sent signal is less than or equal to a power threshold, the transceiver unit is not configured to send the to-be-sent signal to an extension device.

With reference to the sixteenth aspect, in some implementations of the sixteenth aspect, a radio frequency device does not send the to-be-sent signal to the extension device. The processing unit is further configured to: disable an uplink radio frequency channel, disable a power amplifier, disable a low noise amplifier, disable a downlink radio frequency channel, disable an interface between the radio frequency device and the extension device, and clear interface data.

According to a seventeenth aspect, an apparatus is provided. The apparatus includes a transceiver unit. The transceiver unit is configured to receive indication information from a control device. The indication information indicates a radio frequency device that performs target downlink transmission, and the radio frequency device that performs the target downlink transmission is a serving radio frequency device of a terminal device that performs the target downlink transmission. The transceiver unit is further configured to receive a downlink signal from the control device. The transceiver unit is further configured to send the downlink signal to the radio frequency device that performs the target downlink transmission.

With reference to the seventeenth aspect, in some implementations of the seventeenth aspect, the indication information further indicates at least one radio frequency device that performs downlink transmission in at least one time unit, the at least one time unit includes a target time unit for performing the target downlink transmission, and the at least one radio frequency device that performs the downlink transmission in the at least one time unit is a serving radio frequency device of a terminal device that performs the downlink transmission in the at least one time unit.

According to an eighteenth aspect, an apparatus is provided. The apparatus includes a transceiver unit. The transceiver unit is configured to receive indication information from a control device. The indication information indicates a radio frequency device that performs target downlink transmission, and the radio frequency device that performs the target downlink transmission is a serving radio frequency device of a terminal device that performs the target downlink transmission. The transceiver unit is further configured to: send, to the radio frequency device that performs the target downlink transmission, an instruction indicating to perform the target downlink transmission, and/or send, to a radio frequency device that does not perform the target downlink transmission, an instruction indicating not to perform the target downlink transmission. The transceiver unit is further configured to receive a downlink signal from the control device. The transceiver unit is further configured to send the downlink signal to the radio frequency device that performs the target downlink transmission.

With reference to the eighteenth aspect, in some implementations of the eighteenth aspect, the indication information further indicates at least one radio frequency device that performs downlink transmission in at least one time unit, the at least one time unit includes a target time unit for performing the target downlink transmission, and the at least one radio frequency device that performs the downlink transmission in the at least one time unit is a serving radio frequency device of a terminal device that performs the downlink transmission in the at least one time unit.

According to a nineteenth aspect, an apparatus is provided. The apparatus includes a transceiver unit and a processing unit. The transceiver unit is configured to receive an instruction sent by an extension device. The instruction indicates whether to perform target downlink transmission. The processing unit is configured to determine, based on the instruction, whether to perform the target downlink transmission.

With reference to the nineteenth aspect, in some implementations of the nineteenth aspect, the instruction indicates whether to perform downlink transmission in at least one time unit, and the at least one time unit includes a target time unit for performing the target uplink transmission.

With reference to the nineteenth aspect, in some implementations of the nineteenth aspect, the processing unit is further configured to disable at least one of the following: a downlink radio frequency channel, a power amplifier, a low noise amplifier, an interface between a radio frequency device and the extension device, and an uplink radio frequency channel.

With reference to the nineteenth aspect, in some implementations of the nineteenth aspect, the processing unit is further configured to enable at least one of the following: a downlink radio frequency channel, a power amplifier, a low noise amplifier, an uplink radio frequency channel, and an interface between a radio frequency device and the extension device.

According to a twentieth aspect, an apparatus is provided. The apparatus includes a transceiver unit and a processing unit. The processing unit is configured to determine a serving radio frequency device of at least one terminal device that performs target downlink transmission. The transceiver unit is configured to send indication information to an extension device. The indication information indicates at least one radio frequency device that performs the target downlink transmission, and the at least one radio frequency device that performs the target downlink transmission is the serving radio frequency device of the at least one terminal device that performs the target downlink transmission.

With reference to the twentieth aspect, in some implementations of the twentieth aspect, the processing unit is further configured to determine a serving radio frequency device of at least one terminal device that performs downlink transmission in at least one time unit. The at least one time unit includes a target time unit for performing the target downlink transmission. The indication information indicates at least one radio frequency device that performs downlink transmission in the at least one time unit. The at least one radio frequency device that performs the downlink transmission in the at least one time unit is the serving radio frequency device of the at least one terminal device that performs the downlink transmission in the at least one time unit.

According to a twenty-first aspect, this application provides an apparatus, including a processor. The processor is coupled to a memory, and may be configured to execute instructions in the memory, to implement the method according to any one of the first aspect or the possible implementations of the first aspect, the method according to any one of the fifth aspect or the possible implementations of the fifth aspect, the method according to any one of the seventh aspect or the possible implementations of the seventh aspect, or the method according to any one of the eighth aspect or the possible implementations of the eighth aspect. The apparatus further includes the memory. The apparatus further includes a communication interface, and the processor is coupled to the communication interface.

In an implementation, the apparatus is an extension device. When the apparatus is the extension device, the communication interface may be a transceiver or an input/output interface.

In another implementation, the apparatus is a chip or a chip system used in the extension device. When the apparatus is the chip or the chip system used in the extension device, the communication interface may be an input/output interface.

The transceiver may be a transceiver circuit. The input/output interface may be an input/output circuit.

According to a twenty-second aspect, this application provides an apparatus, including a processor. The processor is coupled to a memory, and may be configured to execute instructions in the memory, to implement the method according to any one of the second aspect or the possible implementations of the second aspect, the method according to any one of the sixth aspect or the possible implementations of the sixth aspect, or the method according to any one of the ninth aspect or the possible implementations of the ninth aspect. The apparatus further includes the memory. The apparatus further includes a communication interface, and the processor is coupled to the communication interface.

In an implementation, the apparatus is a radio frequency device. When the apparatus is the radio frequency device, the communication interface may be a transceiver or an input/output interface.

In another implementation, the apparatus is a chip or a chip system used in the radio frequency device. When the apparatus is the chip or the chip system used in the radio frequency device, the communication interface may be an input/output interface.

The transceiver may be a transceiver circuit. The input/output interface may be an input/output circuit.

According to a twenty-third aspect, this application provides an apparatus, including a processor. The processor is coupled to a memory, and may be configured to execute instructions in the memory, to implement the method according to any one of the third aspect or the possible implementations of the third aspect, the method according to any one of the fourth aspect or the possible implementations of the fourth aspect, or the method according to any one of the tenth aspect or the possible implementations of the tenth aspect. The apparatus further includes the memory. The apparatus further includes a communication interface, and the processor is coupled to the communication interface.

In an implementation, the apparatus is a control device. When the apparatus is the control device, the communication interface may be a transceiver or an input/output interface.

In another implementation, the apparatus is a chip or a chip system used in the control device. When the apparatus is the chip or the chip system used in the control device, the communication interface may be an input/output interface.

The transceiver may be a transceiver circuit. The input/output interface may be an input/output circuit.

According to a twenty-fourth aspect, this application provides a processor, including: an input circuit, an output circuit, and a processing circuit. The processing circuit is configured to: receive a signal by using the input circuit, and transmit a signal by using the output circuit, so that the processor performs the methods in the foregoing aspects.

In a specific implementation process, the processor may be a chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver, a signal output by the output circuit may be, for example, but not limited to, output to a transmitter and transmitted by the transmitter. In addition, the input circuit and the output circuit may be a same circuit, and the circuit is used as the input circuit and the output circuit at different moments. Specific implementations of the processor and various circuits are not limited in embodiments of this application.

According to a twenty-fifth aspect, this application provides a processing apparatus, including a communication interface and a processor. The communication interface is coupled to the processor. The communication interface is configured to input and/or output information. The information includes at least one of instructions or data. The processor is configured to execute a computer program, to enable the processing apparatus to perform the methods in the foregoing aspects.

According to a twenty-sixth aspect, this application provides a processing apparatus, including a processor and a memory. The processor is configured to read instructions stored in the memory, and may receive a signal by using a receiver, and transmit a signal by using a transmitter, to enable the processing apparatus to perform the methods in the foregoing aspects.

Optionally, there are one or more processors. If there is a memory, there may also be one or more memories.

The memory may be integrated with the processor, or the memory and the processor may be disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that in a related information exchange process, for example, sending indication information may be a process of outputting the indication information from the processor, and receiving indication information may be a process of inputting the received indication information to the processor. Specifically, information output by the processor may be output to the transmitter, and input information received by the processor may be from the receiver. The transmitter and the receiver may be collectively referred to as a transceiver.

The apparatuses in the twenty-fifth aspect and the twenty-sixth aspect may be chips. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor, and exist independently.

According to a twenty-seventh aspect, this application provides a computer program product. The computer program product includes a computer program (which may also be referred to as code or an instruction). When the computer program is run, a computer is enabled to perform the methods in the foregoing aspects.

According to a twenty-eighth aspect, this application provides a computer-readable storage medium. The computer-readable storage medium stores a computer program (which may also be referred to as code or an instruction). When the computer program is run on a computer, the computer is enabled to perform the methods in the foregoing aspects.

According to a twenty-ninth aspect, this application provides a system, including the foregoing control device, extension device, and radio frequency device.

### BRIEF DESCRIPTION OF DRAWINGS

FIG. 1 is a schematic diagram of a system used in a method according to an embodiment of this application;
FIG. 2 is a schematic flowchart of a signal transmission method according to an embodiment of this application;
FIG. 3 is a schematic flowchart of a signal transmission method according to an embodiment of this application;
FIG. 4 is a schematic flowchart of a signal transmission method according to an embodiment of this application;
FIG. 5 is a schematic flowchart of a signal transmission method according to an embodiment of this application;
FIG. 6 is a schematic flowchart of a signal transmission method according to an embodiment of this application;
FIG. 7 is a schematic flowchart of a signal transmission method according to an embodiment of this application;
FIG. 8 is a schematic flowchart of a signal transmission method according to an embodiment of this application;
FIG. 9 is a schematic block diagram of an apparatus according to an embodiment of this application;
FIG. 10 is a schematic diagram of a structure of an apparatus according to an embodiment of this application; and
FIG. 11 is a schematic diagram of a chip system according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a 5th generation (5th generation, 5G) system or a new radio (new radio, NR) system, a 6th generation (6th generation, 6G) system, or a future communication system. The 5G communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication systems.

In embodiments of this application, a terminal device may also be referred to as user equipment (user equipment, UE), an access terminal, a subscriber unit, a subscriber station, a mobile station, a remote station, a remote terminal, a mobile terminal, a user terminal, a terminal, a wireless communication device, a user agent, or a user apparatus.

The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) telephone, a wireless local loop (wireless local loop, WLL) station, a personal digital assistant (personal digital assistant, PDA), a handheld device or computing device having a wireless communication function, another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a generic term for wearable device such as glasses, gloves, watches, clothes, and shoes that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. Generalized wearable intelligent devices include full-featured and large-size devices, such as smart watches or smart glasses, that can implement complete or partial functions without depending on smartphones, and devices, such as various smart bands or smart jewelry for monitoring physical signs, that focus on only one type of application functions and need to work with other devices such as smartphones.

In addition, the terminal device may alternatively be a terminal device in an internet of things (internet of things, IoT) system. IoT is an important part of future development of information technologies. A main technical feature of the IoT is connecting a thing to a network by using a communication technology, to implement an intelligent network of human-machine interconnection and machine-to-machine interconnection. The IoT technology can implement massive connections, deep coverage, and power saving for terminals by using, for example, a narrowband (narrowband, NB) technology.

In addition, the terminal device may further include sensors such as an intelligent printer, a train detector, and a gas station, and main functions include: collecting data (which is a function of some terminal devices), receiving control information and downlink data of a network device, sending an electromagnetic wave, and transmitting uplink data to a network device.

In descriptions of this application, "/" represents an "or" relationship between associated objects unless otherwise specified. For example, A/B may represent A or B. In this application, "and/or" describes only an association relationship for describing associated objects, and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one item (piece) of the following" or a similar expression thereof means any combination of these items, including a singular item (piece) or any combination of plural items (pieces). For example, at least one (piece) of a, b, or c may represent: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

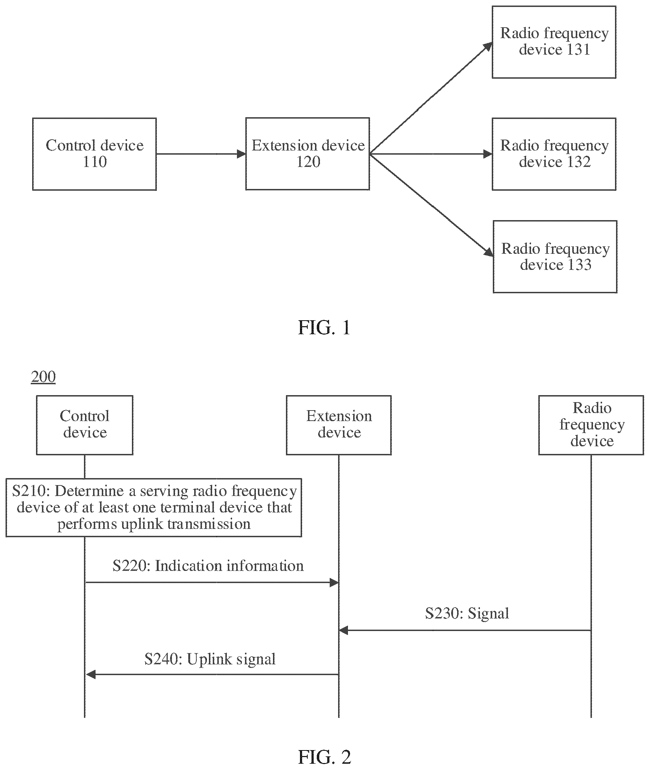

To facilitate understanding of embodiments of this application, an application scenario of embodiments of this application is first described in detail with reference to FIG. 1.

FIG. 1 shows an architecture of a system used in a method according to an embodiment of this application. As shown in FIG. 1, the system includes at least one control device, for example, a control device 110 shown in FIG. 1. The system further includes at least one extension device, for example, an extension device 120 shown in FIG. 1. The system further includes at least two radio frequency devices, for example, a radio frequency device 131, a radio frequency device 132, and a radio frequency device 133 that are shown in FIG. 1.

The control device 110 may serve as a main device of a base station, process a digital baseband signal, and control and manage a function of each device of the base station.

The extension unit 120 is connected to the control device 110 through an optical fiber, and is separately connected to the radio frequency device 131 to the radio frequency device 133 through network cables. The extension unit 120 is configured to provide a data aggregation and distribution function for communication between the control device 110 and the radio frequency device 131 to the radio frequency device 133. For example, in an uplink direction, the extension unit 120 receives uplink signals from the radio frequency device 131 to the radio frequency device 133, performs radio frequency combination on the received uplink signals, and sends a signal to the control device 110. For another example, in a downlink direction, the extension unit 120 receives a downlink signal sent by the control device 110, and sends the downlink signal to the radio frequency device 131 to the radio frequency device 133.

The radio frequency device 131 to the radio frequency device 133 may serve as radio frequency modules of the base station, may be configured to process an intermediate frequency signal and/or a radio frequency signal, and may further be configured to receive and transmit a radio signal. Optionally, the radio frequency device 131 to the radio frequency device 133 may be configured to process a baseband digital signal, for example, perform fast Fourier transform (fast Fourier transform, FFT) on the baseband digital signal.

It should be noted that specific types of the control device, the extension device, and the radio frequency device are not limited in this embodiment of this application. For example, the control device 110 may be any one of the following: a baseband processing unit (baseband unit, BBU or BU), a distributed unit (distributed unit, DU), or a central unit (central unit, CU). For example, the extension device may be any one of the following: a switch, a router, or a remote radio unit hub (remote radio unit hub, rHUB). For example, the radio frequency device 131 to the radio frequency device 133 may be any one of the following: a radio remote unit (radio remote unit, RRU), a radio frequency unit (radio unit, RU), an active antenna unit (active antenna unit, AAU), or a pico-remote radio unit (pRRU).

In some deployments, the control device 110 may include a central unit (central unit, CU) and a DU. The DU is connected to the extension device 120 through the optical fiber. Further, the CU may alternatively use an architecture in which a control plane (control plane, CP) and a user plane (user plane, UP) are separated. That is, the CU may include a CU-CP entity and a CU-UP entity.

It should be further noted that, only an example in which the control device 110 is connected to one extension device 120 is used in FIG. 1, and the control device 110 may alternatively be connected to more extension devices. In addition, only an example in which the extension device 120 is connected to three radio frequency devices (the radio frequency device 131 to the radio frequency device 133) is used in FIG. 1, and the extension device 120 may alternatively be connected to more radio frequency devices.

In the system shown in FIG. 1, during downlink transmission, the extension device 120 forwards the downlink signal sent by the control device 110 to all connected radio frequency devices (the radio frequency device 131 to the radio frequency device 133). Then, the radio frequency device transmits the downlink signal. During uplink transmission, the extension device receives uplink signals from the connected radio frequency devices (the radio frequency device 131 to the radio frequency device 133), combines the received uplink signals into one signal, and sends the signal to the control device 110. However, transmission performance of the transmission mode is not good enough.

In view of this, an embodiment of this application provides a signal transmission method, to improve performance of uplink transmission and/or reduce energy consumption of downlink transmission.

FIG. 2 is a schematic flowchart of a signal transmission method according to an embodiment of this application. As shown in FIG. 2, the method 200 may include S210 to S240. The steps are described in detail below.

S210: A control device determines a serving radio frequency device of at least one terminal device that performs uplink transmission.

For example, the control device may be a BBU, a BU, a CU, or a DU, and the radio frequency device may be an RRU, an RU, a pRRU, or an AAU.

The serving radio frequency device of the terminal device is a radio frequency device that has a communication connection to the terminal device. When the radio frequency device has the communication connection to the terminal device, the radio frequency device may communicate with the terminal device. For example, the radio frequency device may send, to the terminal device, a downlink signal received from the control device. For another example, the radio frequency device may receive an uplink signal from the terminal device.

For example, the control device determines a serving radio frequency device of at least one terminal device that performs target uplink transmission. The target uplink transmission is uplink transmission performed in a target time unit. In other words, the terminal device that performs the target uplink transmission is a terminal device that performs the uplink transmission in the target time unit. In other words, the control device determines a serving radio frequency device of the at least one terminal device that performs the uplink transmission in the target time unit.

It should be noted that the target time unit is used to facilitate description of the technical solution in this embodiment of this application, and the target time unit may be any time unit, but does not indicate a specific time unit. For example, the target time unit is a current time unit.

It should be further noted that the time unit is not limited in this embodiment of this application. For example, the time unit may be any one of the following: an hour (h), a minute (min), a second (s), a millisecond (ms), a frame (frame), a subframe (subframe), a slot (slot), a symbol (symbol), or a transmission time interval (transmission time interval, TTI). For example, if the target time unit is the current time unit, and the time unit is the TTI, the terminal device that performs the target uplink transmission is a terminal device that performs the uplink transmission in the current TTI.

For another example, the control device determines a serving radio frequency device of at least one terminal device that performs uplink transmission in at least one time unit. The at least one time unit includes a target time unit for performing target uplink transmission. It should be noted that, in different time units in the at least one time unit, terminal devices that perform the uplink transmission may be different. For example, the at least one time unit includes a symbol #1, a symbol #2, and a symbol #3. A terminal device that performs the uplink transmission in the symbol #1 includes UE #1, terminal devices that perform the uplink transmission in the symbol #2 include the UE #1 and UE #2, and a terminal device that performs the uplink transmission in the symbol #3 includes UE #3.

A manner in which the control device determines the serving radio frequency device of the terminal device is not limited in this embodiment of this application.

In a possible implementation, the control device determines the serving radio frequency device of the terminal device through uplink signal polling. An uplink signal may be a demodulation reference signal (demodulation reference signal, DMRS), a sounding reference signal (sounding reference signal, SRS), a signal communicated on a physical random access channel (physical random access channel, PRACH), or a signal communicated on a physical uplink control channel (physical uplink control channel, PUCCH).

An example in which the uplink signal is an SRS signal is used below to describe how the control device determines the serving radio frequency device of the terminal device through the uplink signal polling.

Step 1: After the terminal device accesses a network, the control device configures an SRS resource for the terminal device. Correspondingly, the terminal device may send an SRS signal on an allocated SRS resource.

Step 2: The control device sends an instruction, so that the control device receives, at one moment, only one or more SRS signals reported by one radio frequency device or a part of radio frequency devices, and the control device receives, at different moments, SRS signals reported by different radio frequency devices. For example, the control device sends the instruction, so that the control device receives only an SRS signal reported by a radio frequency device #1 at a moment #1, the control device receives only an SRS signal reported by a radio frequency device #2 at a moment #2, and the control device receives only an SRS signal reported by a radio frequency device #3 at a moment #3. At one moment, the terminal device sends the SRS signal at least once. For example, one moment is one SRS symbol.

For example, the control device sends the instruction to the extension device, so that the extension device forwards, to the control device at one moment, only one or more SRS signals reported by one radio frequency device or a part of radio frequency devices. In addition, the extension device forwards, to the control device at different moments, SRS signals reported by different radio frequency devices. For example, the control device sends the instruction to the extension device, to indicate the radio frequency devices configured to report the SRS signals at the different moments. Correspondingly, the extension device forwards, to the control device at one moment and according to the instruction received from the control device, only a signal reported by a radio frequency device configured to report the SRS signal at the moment. For example, if the control device sends the instruction to the extension device, to indicate that a radio frequency device configured to report an SRS signal at the moment #1 is the radio frequency device #1, the extension device forwards only the SRS signal reported by the radio frequency device #1 to the control device at the moment #1.

For example, the control device sends an instruction to each radio frequency device via the extension device, so that only one radio frequency device or a part of radio frequency devices report one or more received SRS signals at a moment, and different radio frequency devices report received SRS signals at different moments. For example, if the control device sends the instruction to the radio frequency device #1 via the extension device, to indicate the radio frequency device #1 to report the received SRS signal at the moment #1, only the radio frequency device #1 reports the received SRS signal to the control device at the moment #1 via the extension device.

Step 3: The control device determines the serving radio frequency device of the terminal device based on power of the SRS signals reported by the radio frequency devices. For example, the control device determines that the serving radio frequency device of the terminal device is a radio frequency device whose reported SRS signal has strongest power. For example, if the control device detects the power of the SRS signals reported by the radio frequency device #1 to the radio frequency device #3, and determines that the SRS signal reported by the radio frequency device #1 has the strongest power, the control device determines that the serving radio frequency device of the terminal device is the radio frequency device #1. For another example, the control device determines that the serving radio frequency device of the terminal device is a radio frequency device whose reported SRS signal exceeds a power threshold. For example, if the control device detects the power of the SRS signals reported by the radio frequency device #1 to the radio frequency device #3, and determines that the power of the SRS signal reported by the radio frequency device #1 exceeds the strength threshold, and the power of the SRS signal reported by the radio frequency device #2 also exceeds the power threshold, the control device determines that the serving radio frequency devices of the terminal device are the radio frequency device #1 and the radio frequency device #2.

In another possible implementation, the control device determines the serving radio frequency device of the terminal device through downlink signal polling. A downlink signal may be a channel state information reference signal (channel state information reference signal, CSI-RS) or a synchronization signal and a physical broadcast channel block (synchronization signal and physical broadcast channel block, SSB).

An example in which the downlink signal is a CSI-RS signal is used below to describe how the control device determines the serving radio frequency device of the terminal device through the downlink signal polling.

Step 1: After the terminal device accesses a network, the control device may configure a CSI-RS resource for the terminal device. Correspondingly, the terminal device may receive a CSI-RS signal from the control device on an allocated CSI-RS resource, and report power of the received CSI-RS signal to the control device.

Step 2: The control device sends an instruction, so that only one radio frequency device or a part of radio frequency devices send, at one moment, one or more CSI-RS signals received from the control device, and different radio frequency devices send, at different moments, CSI-RS signals received from the control device. For example, the control device sends the instruction, so that only the radio frequency device #1 sends, at the moment #1, the CSI-RS signal received from the control device, only the radio frequency device #2 sends, at the moment #2, the CSI-RS signal received from the control device, and only the radio frequency device #3 sends, at the moment #3, the CSI-RS signal received from the control device. At one moment, the radio frequency device sends the CSI-RS signal at least once. For example, one moment is one CSI-RS symbol.

For example, the control device sends the instruction to the extension device, so that the extension device forwards only the CSI-RS signal to one radio frequency device or a part of radio frequency devices at one moment, and the extension device forwards the CSI-RS signal to different radio frequency devices at different moments. Specifically, the control device sends the instruction to the extension device, to indicate radio frequency devices configured to send the CSI-RS signals at the different moments. Correspondingly, the extension device sends, at one moment and according to the instruction received from the control device, a CSI-RS signal to only a radio frequency device configured to send the CSI-RS signal at the moment. For example, if the control device sends the instruction to the extension device, to indicate that a radio frequency device configured to send a CSI-RS signal at the moment #1 is the radio frequency device #1, the extension device forwards only the CSI-RS signal received from the control device to the radio frequency device #1 at the moment #1.

For example, the control device sends an instruction to each radio frequency device via the extension device, so that only one radio frequency device or a part of radio frequency devices send one or more CSI-RS signals at one moment, and different radio frequency devices send CSI-RS signals at different moments. For example, if the control device sends the instruction to the radio frequency device #1 via the extension device, to indicate the radio frequency device #1 to send the CSI-RS signal at the moment #1, only the radio frequency device #1 sends the CSI-RS signal at the moment #1.

Step 3: The control device determines a serving radio frequency device of the terminal device based on power that is of the CSI-RS signal received from each radio frequency device and that is reported by the terminal device. For example, if power of a CSI-RS signal received by the terminal device from a radio frequency device is the strongest, the control device determines that the serving radio frequency device of the terminal device is the radio frequency device. For example, if the power of the CSI-RS signal received by the terminal device from the radio frequency device #1 is the strongest in power of the CSI-RS signals received from the radio frequency device #1 to the radio frequency device #3, the control device determines that the serving radio frequency device of the terminal device is the radio frequency device #1. For another example, if power of a CSI-RS signal received by the terminal device from a radio frequency device exceeds a power threshold, the control device determines that the serving radio frequency device of the terminal device is the radio frequency device. For example, if the power of the CSI-RS signal received by the terminal device from the radio frequency device #1 in the radio frequency device #1 to the radio frequency device #3 exceeds the power threshold, and the power of the CSI-RS signal received by the terminal device from the radio frequency device #2 also exceeds the power threshold, the control device determines that the serving radio frequency devices of the terminal device are the radio frequency device #1 and the radio frequency device #2.

An occasion of determining, by the control device, the serving radio frequency device of the at least one terminal device that performs the uplink transmission is not limited in this embodiment of this application.

For example, when the terminal device accesses the network, the control device determines the serving radio frequency device of the terminal device by performing the uplink signal polling or the downlink signal polling. Further, after determining the at least one terminal device that performs the uplink transmission, the control device may directly determine the serving radio frequency device of the at least one terminal device that performs the uplink transmission without performing the downlink signal polling or the downlink signal polling. For example, the LTE #1, the UE #2, and the UE #3 exist in a coverage area of the control device. After the LTE #1 accesses the network, the control device determines, by performing the uplink signal polling or the downlink signal polling, that a serving radio frequency device of the UE #1 is an RU #2. After LTE #2 accesses the network, the control device determines, by performing the uplink signal polling or the downlink signal polling, that a serving radio frequency device of the LTE #2 is an RU #4. After the UE #3 accesses the network, the control device determines, by performing the uplink signal polling or the downlink signal polling, that a serving radio frequency device of the LTE #3 is an RU #4. Further, if the control device determines that the at least one terminal device that performs the uplink transmission includes the LTE #1 and the UE #2, the control device may directly determine a serving radio frequency device of the UE #1 and the UE #2 without performing the uplink signal polling or the downlink signal polling.

It should be noted that, in this embodiment of this application, determining of the serving radio frequency device of the terminal device is not limited only when the terminal device accesses the network. If the terminal device is always in the coverage area of the control device, the control device may perform the uplink signal polling or the downlink signal polling for a plurality of times, to dynamically determine a serving radio frequency device of the terminal device. For example, the control device may periodically perform the uplink signal polling or the downlink signal polling, to periodically determine the serving radio frequency device of the terminal device. Alternatively, the control device may aperiodically perform the uplink signal polling or the downlink signal polling, to aperiodically determine the serving radio frequency device of the terminal device.

For another example, after determining the at least one terminal device that performs the uplink transmission, the control device determines, by performing the uplink signal polling or the downlink signal polling, the serving radio frequency device of the at least one terminal device that performs the uplink transmission. For example, the LTE #1, the LTE #2, and the LTE #3 exist in the coverage area of the control device. If the control device determines that the at least one terminal device that performs the uplink transmission includes the LTE #1 and the LTE #2, the control device determines the serving radio frequency devices of the LTE #1 and the LTE #2 by performing the uplink signal polling or the downlink signal polling. Because the LTE #3 does not perform the uplink transmission, the control device may not determine a serving radio frequency device of the UE #3.

Optionally, in S210, the control device may further determine a serving radio frequency device of at least one terminal device that performs downlink transmission. For example, the control device may further determine a serving radio frequency device of a terminal device that performs target downlink transmission. For another example, the control device may further determine a serving radio frequency device of a terminal device that performs the downlink transmission in at least one time unit. The at least one time unit includes a target time unit for performing the target downlink transmission.

S220: The control device sends indication information to the extension device. Correspondingly, in S220, the extension device receives the indication information from the control device.

For example, the extension device may be a switch, a router, or an rHUB.

The indication information indicates the at least one radio frequency device that performs the target uplink transmission. It may be understood that uplink data sent by the at least one terminal device that performs the target uplink transmission needs to be forwarded to the control device via the serving radio frequency device of the at least one terminal device. Therefore, the at least one radio frequency device that performs the target uplink transmission and that is indicated by the indication information is the serving radio frequency device of the at least one terminal device that performs the target uplink transmission. That is, the indication information indicates the serving radio frequency device of the at least one terminal device that performs the target uplink transmission.

In a possible implementation, if the control device determines, in S210, the serving radio frequency device of the at least one terminal device that performs the target uplink transmission, the control device may determine the indication information based on the serving radio frequency device of the at least one terminal device that performs the target uplink transmission.

In another possible implementation, if in S210, the control device determines the serving radio frequency device of the at least one terminal device that performs the uplink transmission in the at least one time unit, the control device may determine, in the serving radio frequency device of the at least one terminal device that performs the uplink transmission in the at least one time unit, the serving radio frequency device of the at least one terminal device that performs the target uplink transmission. Then, the control device determines the indication information based on the serving radio frequency device of the at least one terminal device that performs the target uplink transmission. For example, if the control device determines the serving radio frequency device of the terminal device that performs the uplink transmission in the symbol #1 to the symbol #3 in S210, the control device first determines the serving radio frequency device of the terminal device that performs the uplink transmission in a current symbol (for example, the symbol #2). Then, the indication information is determined based on the serving radio frequency device of the terminal device that performs the uplink transmission in the current symbol.

A manner in which the indication information indicates the at least one radio frequency device that performs the target uplink transmission is not limited in this embodiment of this application.

For example, the indication information includes an identifier of the at least one radio frequency device that performs the target uplink transmission. Correspondingly, the extension device may identify, based on the identifier included in the indication information, the at least one radio frequency device that performs the target uplink transmission. The identifier of the radio frequency device identifies the radio frequency device. For example, the identifier of the radio frequency device includes one or more of the following: an electronic serial number (electronic serial number, ESN) of the radio frequency device, a cabinet number of a cabinet in which the radio frequency device is located, a subrack number of a subrack in which the radio frequency device is located, and a slot number of a slot in which the radio frequency device is located.

For another example, the indication information includes an identifier of a radio frequency device that does not perform the target uplink transmission. Correspondingly, the extension device may exclude, from connected radio frequency devices based on the identifier included in the indication information, the radio frequency device that does not perform the target uplink transmission. A remaining radio frequency device is the radio frequency device that performs the target uplink transmission. For example, if radio frequency devices connected to the extension device include the RU #1 to the RU #4, and the indication information includes an identifier of the RU #3 and an identifier of the RU #4, the extension device may determine, based on the identifiers included in the indication information, that the RU #3 and the RU #4 do not perform the target uplink transmission, and may determine that the RU #1 and the RU #2 perform the target uplink transmission.

For another example, the indication information includes N bits, and a value of N is equal to a quantity of radio frequency devices connected to the extension device. The N bits are in a one-to-one correspondence with the radio frequency devices connected to the extension device. For example, if the extension device is connected to four radio frequency devices, the indication information may include 4 bits, and the 4 bits are in a one-to-one correspondence with the four radio frequency devices. Each of the N bits included in the indication information indicates whether a radio frequency device corresponding to the bit performs the target uplink transmission. For example, if a value of an n^{th} bit is "1", the n^{th} bit indicates that the radio frequency device corresponding to the n^{th} bit performs the target uplink transmission; or if a value of an n^{th} bit is "0", the n^{th} bit indicates that the radio frequency device corresponding to the n^{th} bit does not perform the target uplink transmission. Alternatively, if the value of the n^{th} bit is "0", the n^{th} bit indicates that the radio frequency device corresponding to the n^{th} bit performs the target uplink transmission; or if the value of the n^{th} bit is "1", the n^{th} bit indicates that the radio frequency device corresponding to the n^{th} bit does not perform the target uplink transmission. The n^{th} bit is any bit in the N bits.

For another example, the indication information includes N control fields, and the N values are equal to a quantity of radio frequency devices connected to the extension device. The N control fields are in a one-to-one correspondence with the radio frequency devices connected to the extension device. For example, if the extension device is connected to four radio frequency devices, the indication information may include four control fields, and the four control fields are in a one-to-one correspondence with the four radio frequency devices. Each of the N control fields included in the indication information indicates a control status of the radio frequency device corresponding to the control field. The control status of the radio frequency device includes on or off. If the control status of the radio frequency device is on, it indicates that the radio frequency device is a radio frequency device that performs the uplink transmission; or if the control status of the radio frequency device is off, it indicates that the radio frequency device is a radio frequency device that does not perform the uplink transmission. For example, the indication information includes four control fields. The indication information sent by the control device to the extension device is shown in Table 1.

**Table 1**

| Message address | Message type | Control status of the RU #1 | Control status of the RU #2 | Control status of the RU #3 | Control status of the RU #4 |
|---|---|---|---|---|---|
| 0xFFFF | Dynamic On/Off of the RU | On | Off | Off | On |

It should be noted that although the target uplink transmission is uplink transmission performed in the target time unit, whether the indication information further indicates the target time unit for performing the target uplink transmission is not limited in this embodiment of this application.

For example, the indication information does not indicate the target time unit. For example, the extension device may consider by default that the target time unit is a time unit in which the extension device receives the indication information. In other words, the extension device may consider by default that the target uplink transmission is uplink transmission performed in the time unit in which the extension device receives the indication information. For example, if the time unit is the symbol, and the extension device receives the indication information in the symbol #1, the extension device may determine that the target time unit is the symbol #1. In other words, the extension device may determine that the target uplink transmission is uplink transmission performed in the symbol #1. For another example, the extension device may consider by default that the target time unit is a time unit following a time unit in which the extension device receives the indication information. In other words, the extension device may consider by default that the target uplink transmission is uplink transmission performed in the time unit following the time unit in which the extension device receives the indication information. For example, if the time unit is the slot, and the extension device receives the indication information in a slot #1, the extension device may determine that the target time unit is a slot #2 following the slot #1. In other words, the extension device may determine that the target uplink transmission is uplink transmission performed in the slot #2 following the slot #1.

For another example, the indication information indicates the target time unit. For example, if the time unit is the slot, the indication information further includes a slot number of a target slot. For another example, if the time unit is the subframe, the indication information further includes a subframe number of a target subframe. It may be understood that, when the indication information indicates the target time unit, the indication information indicates the at least one radio frequency device that performs the target uplink transmission in the target time unit.

When the indication information indicates the target time unit, that the indication information includes four control fields is used as an example. The indication information sent by the control device to the extension device is shown in Table 2.

**Table 2**

| Message address | Message type | Time domain position | Control status of the RU #1 | Control status of the RU #2 | Control status of the RU #3 | Control status of the RU #4 |
|---|---|---|---|---|---|---|
| 0xFFFF | Dynamic On/Off of the RU | Target time unit | On | Off | Off | On |

Optionally, if in S210, the control device determines the serving radio frequency device of the at least one terminal device that performs the uplink transmission in the at least one time unit, the indication information may indicate the at least one radio frequency device that performs the uplink transmission in the at least one time unit.

It may be understood that, because uplink data sent by the terminal device in the at least one time unit needs to be forwarded by the radio frequency device to the control device, the at least one radio frequency device indicated by the indication information is the serving radio frequency device of the at least one terminal device that performs the uplink transmission in the at least one time unit. For example, in S210, the control device determines that terminal devices that perform the uplink transmission in the symbol #1 to the symbol #3 include the LTE #1 to the UE #3, and determines that the serving radio frequency device of the LTE #1 is the RU #2, and the serving radio frequency device of the LTE #2 and the LTE #3 are the RU #4. In this case, the at least one radio frequency device indicated by the indication information includes the RU #2 and/or the RU #4.

For example, the at least one radio frequency device indicated by the indication information performs the uplink transmission in each time unit in the at least one time unit. That is, a same radio frequency device performs the uplink transmission in each time unit in the at least one time unit. For example, the at least one radio frequency device indicated by the indication information is a radio frequency device that serves a largest quantity of terminal devices and that is in the serving radio frequency device of the at least one terminal device that performs the uplink transmission in the at least one time unit. For example, the at least one radio frequency device indicated by the indication information is the RU #4. For another example, the at least one radio frequency device indicated by the indication information includes serving radio frequency devices of all terminal devices that perform the uplink transmission in the at least one time unit. For example, the at least one radio frequency device indicated by the indication information includes the RU #2 and the RU #4.

For another example, the indication information may indicate a radio frequency device that performs the uplink transmission in each time unit in the at least one time unit. A radio frequency device that performs the uplink transmission in a first time unit in the at least one time unit is a serving radio frequency device of a terminal device that performs the uplink transmission in the first time unit, and the first time unit is any time unit in the at least one time unit. It may be understood that, if terminal devices that perform the uplink transmission in different time units are different, radio frequency devices that perform the uplink transmission in the different time units and that are indicated by the indication information may also be different. For example, a terminal device that performs the uplink transmission in the symbol #1 is the LTE #1, terminal devices that perform the uplink transmission in the symbol #2 are the UE #1 and the UE #2, and a terminal device that performs the uplink transmission in the symbol #3 is the LTE #3. In this case, the indication information indicates that a radio frequency device that performs the uplink transmission in the symbol #1 is a pRRU #2, radio frequency devices that perform the uplink transmission in the symbol #2 are the pRRU #2 and a pRRU #4, and a radio frequency device that performs the uplink transmission in the symbol #3 is the pRRU #4.

A manner in which the indication information indicates the at least one radio frequency device that performs the uplink transmission in the at least one time unit is not limited in this embodiment of this application.

For example, the indication information includes a correspondence between a time unit and an identifier of a radio frequency device that performs the uplink transmission. Correspondingly, the extension device may determine, based on the correspondence between the time unit and the identifier of the radio frequency device, the radio frequency device that performs the uplink transmission in each time unit in the at least one time unit. For example, the indication information is shown in Table 3 or Table 4.

**Table 3**

| Time unit | Identifier of the radio frequency device that performs the uplink transmission |
|---|---|
| Symbol #1 to symbol #3 | Identifier of the RU #2 and identifier of the RU #4 |

**Table 4**

| Time unit | Identifier of the radio frequency device that performs the uplink transmission |
|---|---|
| Symbol #1 | Identifier of the RU #2 |
| Symbol #2 | Identifier of the RU #2 and identifier of the RU #4 |
| Symbol #3 | Identifier of the RU #4 |

For another example, the indication information includes a correspondence between a time unit and an identifier of a radio frequency device that does not perform the uplink transmission. Correspondingly, the extension device may determine, based on the correspondence between the time unit and the identifier of the radio frequency device, a radio frequency device that does not perform the uplink transmission in each time unit in the at least one time unit, and further determine the radio frequency device that performs the uplink transmission. For example, the indication information is shown in Table 5 or Table 6. It is assumed that radio frequency devices connected to the extension device include the RU #1 to the RU #4.

**Table 5**

| Time unit | Identifier of the radio frequency device that does not perform the uplink transmission |
|---|---|
| Symbol #1 to symbol #3 | Identifier of the RU #1 and identifier of the RU #3 |

**Table 6**

| Time unit | Identifier of the radio frequency device that does not perform the uplink transmission |
|---|---|
| Symbol #1 | Identifier of the RU #1, identifier of the RU #3, and identifier of the RU #4 |
| Symbol #2 | Identifier of the RU #1 and identifier of the RU #3 |
| Symbol #3 | Identifier of the RU #1, identifier of the RU #2, and identifier of the RU #3 |

For another example, the indication information includes a correspondence between a time unit and N bits. Correspondingly, the extension device may determine, based on the correspondence between the time unit and the N bits, the radio frequency device that performs the uplink transmission in each time unit in the at least one time unit. For example, the indication information is shown in Table 7 or Table 8. It is assumed that radio frequency devices connected to the extension device include the RU #1 to the RU #4, "1" indicates that the uplink transmission is performed, and "0" indicates that the uplink transmission is not performed.

**Table 7**

| Time unit | N bits |
|---|---|
| Symbol #1 to symbol #3 | 0101 |

**Table 8**

| Time unit | N bits |
|---|---|
| Symbol #1 | 0100 |
| Symbol #2 | 0101 |
| Symbol #3 | 0001 |

For still another example, the indication information includes a correspondence between a time unit and N control fields. Correspondingly, the extension device may determine, based on the correspondence between the time unit and the N control fields, the radio frequency device that performs the uplink transmission in each time unit in the at least one time unit.

Optionally, if the extension device determines, based on the indication information received from the control device, the at least one radio frequency device that performs the target uplink transmission, the extension device disables an interface between the extension device and the radio frequency device that does not perform the uplink transmission. For example, in the symbol #1, the extension device determines that the radio frequency device that performs the target uplink transmission includes the RU #2. In this case, the extension device disables the interface between the extension device and the RU #1, disables the interface between the extension device and the RU #3, and disables the interface between the extension device and the RU #4.

Optionally, the indication information further indicates the at least one radio frequency device that performs the target downlink transmission, and the at least one radio frequency device that performs the target downlink transmission is the serving radio frequency device of the at least one terminal device that performs the target downlink transmission.

Optionally, the indication information further indicates the at least one radio frequency device that performs the downlink transmission in the at least one time unit. The at least one radio frequency device that performs the downlink transmission in the at least one time unit is the serving radio frequency device of the at least one terminal device that performs the downlink transmission in the at least one time unit.

S230: The extension device receives a signal from the at least one radio frequency device that performs the target uplink transmission. Correspondingly, in S230, the radio frequency device sends the signal to the extension device.

In a possible implementation, in S230, the extension device receives only the signal from the at least one radio frequency device that performs the target uplink transmission. That is, the extension device does not receive a signal from the radio frequency device that does not perform the target uplink transmission. As described above, if the extension device disables the interface between the extension device and the radio frequency device that does not perform the uplink transmission, the extension device does not receive the signal from the radio frequency device that does not perform the target uplink transmission.

In another possible implementation, in S230, the extension device receives the signal from the at least one radio frequency device that performs the target uplink transmission, and also receives the signal from the radio frequency device that does not perform the target uplink transmission.

It should be understood that, if the extension device receives a signal from a radio frequency device, the extension device may determine, based on the indication information, whether the radio frequency device is a radio frequency device that performs the target uplink transmission or a radio frequency device that does not perform the target uplink transmission.

It may be understood that because the radio frequency device that does not perform the target uplink transmission is not the serving radio frequency device of the terminal device that performs the target uplink transmission, the radio frequency device that does not perform the target uplink transmission cannot receive the uplink data from the terminal device that performs the target uplink transmission. Therefore, the signal sent by the radio frequency device that does not perform the target uplink transmission to the extension device is a noise floor generated by the radio frequency device.

S240: The extension device sends an uplink signal to the control device. Correspondingly, in S240, the control device receives the uplink signal from the extension device.

In a possible implementation, the uplink signal is determined based on the signal received from the at least one radio frequency device that performs the target uplink transmission. For example, the extension device performs radio frequency combination on the signal received from the at least one radio frequency device that performs the target uplink transmission, to obtain the uplink signal.

In another possible implementation, the uplink signal is determined based on the signal received from at least one radio frequency device in the at least one radio frequency device that performs the target uplink transmission. For example, the extension device performs radio frequency combination on the signal received from the at least one radio frequency device in the at least one radio frequency device that performs the target uplink transmission, to obtain the uplink signal.

Optionally, the signal received by the extension device from the at least one radio frequency device in the at least one radio frequency device that performs the target uplink transmission has largest power in the signal received from the at least one radio frequency device that performs the target uplink transmission.

For example, after receiving the signal from the at least one radio frequency device that performs the target uplink transmission, the extension device detects the power of the signal received from the at least one radio frequency device that performs the target uplink transmission, and determines the signal with the largest power in the signal received from the at least one radio frequency device that performs the target uplink transmission. Then, the extension device determines the uplink signal based on the signal with the largest power in the signal received from the at least one radio frequency device that performs the target uplink transmission.

Optionally, power of the signal received by the extension device from the at least one radio frequency device in the at least one radio frequency device that performs the target uplink transmission exceeds a power threshold.

For example, after receiving the signal from the at least one radio frequency device that performs the target uplink transmission, the extension device detects the power of the signal received from the at least one radio frequency device that performs the target uplink transmission, and determines the signal exceeding the power threshold in the signal received from the at least one radio frequency device that performs the target uplink transmission. Then, the extension device determines the uplink signal based on the signal exceeding the power threshold in the signal received from the at least one radio frequency device that performs the target uplink transmission.

The power threshold is determined based on noise generated by a radio frequency device connected to the extension device. For example, the power threshold is noise of a radio frequency device that generates largest noise in a plurality of radio frequency devices connected to the extension device. For example, in the RU #1 to the RU #4 connected to the extension device, noise generated by the RU #1 is the largest. In this case, the power threshold is equal to the noise generated by the RU #1. For another example, the power threshold is an average value of noise generated by the plurality of radio frequency devices connected to the extension device. For example, if the extension device is connected to the RU #1 to the RU #4, the power threshold is equal to an average value of noise generated by the RU #1 to the RU #4.

In this embodiment of this application, the control device determines, through the uplink signal polling or the downlink signal polling, the serving radio frequency device of the at least one terminal device that performs the target uplink transmission, and sends the indication information to the extension device, to indicate the extension device to report the signal received from the at least one radio frequency device that performs the target uplink transmission. In this way, the extension device is prevented from reporting, to the control device, the signal received from the radio frequency device that does not perform the target uplink transmission. It may be understood that because the radio frequency device that does not perform the target uplink transmission is not the serving radio frequency device of the terminal device that performs the target uplink transmission, the radio frequency device that does not perform the target uplink transmission cannot receive the uplink data from the terminal device that performs the target uplink transmission. Therefore, the signal sent by the radio frequency device that does not perform the target uplink transmission to the extension device is a noise floor generated by the radio frequency device. Therefore, the extension device does not report the signal received from the radio frequency device that does not perform the target uplink transmission, so that the uplink noise floor can be reduced.

Optionally, the method 200 further includes: The extension device receives a downlink signal from the control device. The extension device sends the downlink signal to the radio frequency device that performs the target downlink transmission. It should be noted that the extension device does not send the downlink signal to the radio frequency device that does not perform the target downlink transmission.

Optionally, the method 200 further includes: The extension device sends, to the radio frequency device that performs the target downlink transmission, an instruction indicating to perform the target downlink transmission, and/or sends, to the radio frequency device that does not perform the target downlink transmission, an instruction indicating not to perform the target downlink transmission. The extension device receives the downlink signal from the control device. The extension device sends the downlink signal to the radio frequency device that performs the target downlink transmission. Optionally, the extension device also sends the downlink signal to the radio frequency device that does not perform the target downlink transmission. Correspondingly, after receiving the downlink signal, the radio frequency device determines, according to the received instruction, whether to send the downlink signal. If the radio frequency device receives the instruction indicating to perform the target downlink transmission, or does not receive the instruction indicating not to perform the target downlink transmission, the radio frequency device determines to send the downlink signal. If the radio frequency device receives the instruction indicating not to perform the target downlink transmission, or does not receive the instruction indicating to perform the target downlink transmission, the radio frequency device determines not to send the downlink signal.

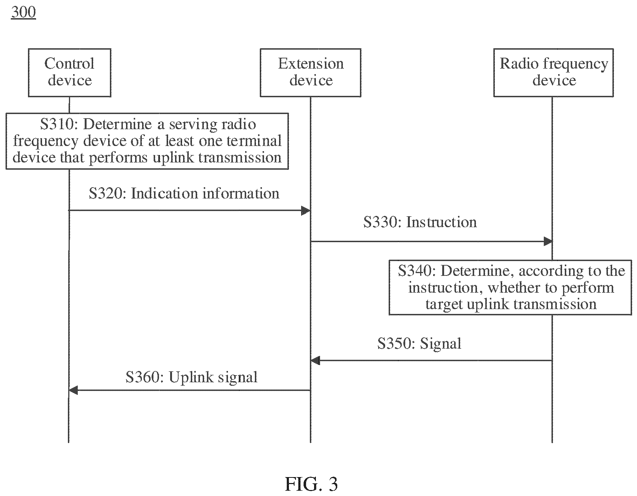

FIG. 3 is a schematic flowchart of a signal transmission method according to another embodiment of this application. As shown in FIG. 3, the method 300 may include S310 to S460. Steps are described in detail below.

S310: A control device determines a serving radio frequency device of at least one terminal device that performs uplink transmission.

Specifically, S310 is the same as S210 in the method 200. For brevity, details are not described in this embodiment of this application again.

S320: The control device sends indication information to the extension device. Correspondingly, in S320, the extension device receives the indication information from the control device.

Specifically, S320 is the same as S220 in the method 200. For brevity, details are not described in this embodiment of this application again.

S330: The extension device sends an instruction to a radio frequency device. Correspondingly, in S330, the radio frequency device receives the instruction from the control device.

The instruction indicates whether to perform target uplink transmission. For descriptions of the target uplink transmission, refer to S210.

In a possible implementation, that the extension device sends an instruction to a radio frequency device includes: The extension device sends, to a radio frequency device that performs the target uplink transmission, an instruction indicating to perform the target uplink transmission. For ease of description, the instruction indicating to perform the target uplink transmission is denoted as a first instruction below.

For example, if the indication information received by the extension device in S320 indicates at least one radio frequency device that performs the target uplink transmission, the extension device may send the first instruction to the at least one radio frequency device indicated by the indication information. For example, if the at least one radio frequency device that performs the target uplink transmission and that is indicated by the indication information received by the extension device includes an RU #2, the extension device sends the first instruction to the RU #2.

For another example, if the indication information received by the extension device in S320 indicates at least one radio frequency device that performs the uplink transmission in at least one time unit, and the at least one radio frequency device is configured to perform the uplink transmission in each time unit in the at least one time unit, the extension device may send the first instruction to the at least one radio frequency device indicated by the indication information. For example, if the indication information received by the extension device indicates that radio frequency devices that perform the uplink transmission in a symbol #1 to a symbol #3 include the RU #2 and an RU #4, the extension device sends the first instruction to the RU #2 and the RU #4. For example, in the symbol #1, the first instruction sent by the extension device to the RU #2 and the RU #4 indicates to perform the uplink transmission in the symbol #1. For another example, in the symbol #2, the first instruction sent by the extension device to the RU #2 and the RU #4 indicates to perform the uplink transmission in the symbol #2. For still another example, in the symbol #3, the first instruction sent by the extension device to the RU #2 and the RU #4 indicates to perform the uplink transmission in the symbol #3. For still another example, the first instruction sent by the extension device to the RU #2 and the RU #4 indicates to perform the uplink transmission in the symbol #1 to the symbol #3.

For still another example, if the indication information received by the extension device in S320 indicates a radio frequency device that performs the uplink transmission in each time unit in the at least one time unit, the extension device first determines, based on the indication information, a radio frequency device that performs the target uplink transmission in a target time unit, and sends the first instruction to the radio frequency device that performs the target uplink transmission in the target time unit. For example, the indication information received by the extension device indicates that a radio frequency device that performs the uplink transmission in the symbol #1 includes the RU #2, radio frequency devices that perform the uplink transmission in the symbol #2 include the RU #2 and the RU #4, and a radio frequency device that performs the uplink transmission in the symbol #3 includes the RU #4. In the symbol #1, the extension device first determines, based on the indication information, that the RU #2 performs the uplink transmission in the symbol #1, and the extension device sends the first instruction to the RU #2. Alternatively, in the symbol #2, the extension device first determines, based on the indication information, that the RU #2 and the RU #4 perform the uplink transmission in the symbol #2, and the extension device sends the first instruction to the RU #2 and the RU #4. Alternatively, in the symbol #3, the extension device first determines, based on the indication information, that the RU #4 performs the uplink transmission in the symbol #3, and the extension device sends the first instruction to the RU #4.

The first instruction is not limited in this embodiment of this application. For example, the extension device may generate the first instruction based on the indication information. For example, the first instruction may be one-bit information. For another example, the first instruction is the indication information. To be specific, the extension device sends the received indication information to the radio frequency device configured to perform the target uplink transmission.

It should be noted that although the first instruction indicates to perform the target uplink transmission, whether the first instruction further indicates the target time unit for performing the target uplink transmission is not limited in this embodiment of this application.

For example, the first instruction does not indicate the target time unit. For example, the radio frequency device may consider by default that the target time unit is a time unit in which the extension device receives the first instruction. In other words, the radio frequency device may consider by default that the target uplink transmission is uplink transmission performed in the time unit in which the radio frequency device receives the first instruction. For example, if the time unit is a symbol, and the radio frequency device receives the first instruction in the symbol #1, the radio frequency device may determine that the target time unit is the symbol #1. In other words, the radio frequency device may determine that the target uplink transmission indicated by the first instruction is uplink transmission performed in the symbol #1. Alternatively, the radio frequency device may consider by default that the target time unit is a time unit following the time unit in which the radio frequency device receives the first instruction. For another example, the radio frequency device may consider by default that the target uplink transmission is uplink transmission performed in the time unit following the time unit in which the radio frequency device receives the first instruction. For example, if the time unit is the symbol, and the radio frequency device receives the first instruction in the symbol #1, the radio frequency device may determine that the target time unit is the symbol #2 following the symbol #1. In other words, the radio frequency device may determine that the target uplink transmission indicated by the first instruction is uplink transmission performed in the symbol #2 following the symbol #1.

For another example, the first instruction indicates the target time unit. For example, if the time unit is a slot, the first instruction further includes a slot number of a target slot.

In another possible implementation, that the extension device sends an instruction to a radio frequency device includes: The extension device sends, to a radio frequency device that does not perform the target uplink transmission, an instruction indicating not to perform the target uplink transmission. For ease of description, the instruction indicating not to perform the target uplink transmission is denoted as a second instruction below.

For example, if the indication information received by the extension device in S320 indicates at least one radio frequency device that performs the target uplink transmission, the extension device may send the second instruction to a radio frequency device that is not indicated by the indication information. For example, radio frequency devices connected to the extension device include the RU #1 to the RU #4, and the indication information received by the extension device indicates that the at least one radio frequency device that performs the target uplink transmission includes the RU #2. In this case, the extension device sends the second instruction to the RU #1, the RU #3, and the RU #4.

For another example, if the indication information received by the extension device in S320 indicates at least one radio frequency device that performs the uplink transmission in at least one time unit, and the at least one radio frequency device performs the uplink transmission in each time unit in the at least one time unit, the extension device may send the second instruction to the radio frequency device that is not indicated by the indication information. For example, the radio frequency devices connected to the extension device include the RU #1 to the RU #4, and the indication information received by the extension device indicates that the radio frequency devices that perform the uplink transmission in the symbol #1 to the symbol #3 include the RU #2 and the RU #4. In this case, the extension device sends the second instruction to the RU #1 and the RU #3. For example, in the symbol #1, the second instruction sent by the extension device to the RU #1 and the RU #3 indicates not to perform the uplink transmission in the symbol #1. For another example, in the symbol #2, the second instruction sent by the extension device to the RU #1 and the RU #3 indicates not to perform the uplink transmission in the symbol #2. For still another example, in the symbol #3, the second instruction sent by the extension device to the RU #1 and the RU #3 indicates not to perform the uplink transmission in the symbol #3. For still another example, the second instruction sent by the extension device to the RU #1 and the RU #3 indicates not to perform the uplink transmission in the symbol #1 to the symbol #3.

For still another example, if the indication information received by the extension device in S320 indicates a radio frequency device that performs the uplink transmission in each time unit in the at least one time unit, the extension device first determines, based on the indication information, a radio frequency device that does not perform the target uplink transmission in a target time unit, and sends the second instruction to the radio frequency device that does not perform the target uplink transmission in the target time unit. For example, the indication information received by the extension device indicates that a radio frequency device that performs the uplink transmission in the symbol #1 includes the RU #2, radio frequency devices that perform the uplink transmission in the symbol #2 include the RU #2 and the RU #4, and a radio frequency device that performs the uplink transmission in the symbol #3 includes the RU #4. In the symbol #1, the extension device first determines, based on the indication information, that the RU #1, the RU #3, and the RU #4 do not perform the uplink transmission in the symbol #1. Then, the extension device sends the second instruction to the RU #1, the RU #3, and the RU #4. Alternatively, in the symbol #2, the extension device first determines, based on the indication information, that the RU #1 and the RU #3 do not perform the uplink transmission in the symbol #2. Then, the extension device sends the second instruction to the RU #1 and the RU #3. Alternatively, in the symbol #3, the extension device first determines, based on the indication information, that the RU #1 to the RU #3 do not perform the uplink transmission in the symbol #3. Then, the extension device sends the second instruction to the RU #1 to the RU #3.

The second instruction is not limited in this embodiment of this application. For example, the extension device may generate the second instruction based on the indication information. For example, the second instruction may be one-bit information. For another example, the second instruction is the indication information. To be specific, the extension device sends the received indication information to the radio frequency device that does not perform the target uplink transmission.

It should be noted that although the second instruction indicates not to perform the target uplink transmission, whether the second instruction further indicates the target time unit for performing the target uplink transmission is not limited in this embodiment of this application.

For example, the second instruction does not indicate the target time unit. For example, the radio frequency device may consider by default that the target time unit is a time unit in which the extension device receives the second instruction. In other words, the radio frequency device may consider by default that the target uplink transmission is uplink transmission performed in the time unit in which the radio frequency device receives the second instruction. For example, if the time unit is a symbol, and the radio frequency device receives the second instruction in the symbol #1, the radio frequency device may determine that the target time unit is the symbol #1. In other words, the radio frequency device may determine that the target uplink transmission indicated by the second instruction is uplink transmission performed in the symbol #1. For another example, the radio frequency device may consider by default that the target time unit is a time unit following the time unit in which the radio frequency device receives the second instruction. In other words, the radio frequency device may consider by default that the target uplink transmission is uplink transmission performed in the time unit following the time unit in which the radio frequency device receives the second instruction. For example, if the time unit is the symbol, and the radio frequency device receives the second instruction in the symbol #1, the radio frequency device may determine that the target time unit is the symbol #2 following the symbol #1. In other words, the radio frequency device may determine that the target uplink transmission indicated by the second instruction is uplink transmission performed in the symbol #2 following the symbol #1.

For another example, the second instruction indicates the target time unit. For example, if the time unit is a slot, the second instruction further includes a slot number of a target slot.

In still another possible implementation, that the extension device sends an instruction to a radio frequency device includes: The extension device sends the first instruction to the radio frequency device that performs the target uplink transmission, and sends the second instruction to the radio frequency device that does not perform the target uplink transmission.

When the extension device sends both the first instruction and the second instruction, if both the first instruction and the second instruction are indication information, the extension device may send the indication information through broadcast. It may be understood that, when the extension device sends the indication information through broadcast, all radio frequency devices connected to the extension device may receive the indication information from the extension device. It may be further understood that, when the extension device sends the indication information through broadcast, the extension device may directly send the received indication information to the connected radio frequency device without parsing the indication information.

Optionally, if the indication information received by the extension device in S320 indicates a radio frequency device that performs the uplink transmission in each time unit in the at least one time unit, the instruction sent by the extension device to the radio frequency device in S330 may indicate whether to perform the uplink transmission in each time unit in the at least one time unit. For example, the indication information received by the extension device indicates that the radio frequency device that performs the uplink transmission in the symbol #1 includes the RU #2, the radio frequency devices that perform the uplink transmission in the symbol #2 include the RU #2 and the RU #4, and the radio frequency device that performs the uplink transmission in the symbol #3 includes the RU #4. In this case, the instruction sent by the extension device to the RU #1 and the RU #3 in S330 indicates not to perform the uplink transmission in the symbol #1 to the symbol #3. The instruction sent by the extension device to the RU #2 indicates to perform the uplink transmission in the symbol #1 and the symbol #2, and indicates not to perform the uplink transmission in the symbol #3. The instruction sent by the extension device to the RU #4 indicates to perform the uplink transmission in the symbol #2 and the symbol #3, and indicates not to perform the uplink transmission in the symbol #1.

The instruction sent by the extension device to each radio frequency device may be an instruction generated by the extension device based on the indication information, or the instruction sent by the extension device to each radio frequency device may be the indication information. This is not limited in this embodiment of this application.

Optionally, if the indication information received by the extension device further indicates at least one radio frequency device that performs target downlink transmission, the extension device may further send, to the radio frequency device that performs the target downlink transmission, an instruction indicating to perform the target downlink transmission, and/or send, to a radio frequency device that does not perform the target downlink transmission, an instruction indicating not to perform the target downlink transmission.

S340: The radio frequency device determines, according to the instruction, whether to perform the target uplink transmission.

If the radio frequency device has a signal to be sent to the extension device, the radio frequency device determines, according to the instruction, whether to perform the target uplink transmission. If the radio frequency device determines, according to the instruction, to perform the target uplink transmission, the radio frequency device sends the signal to the extension device. If the radio frequency device determines, according to the instruction, not to perform the target uplink transmission, the radio frequency device does not send the signal to the extension device. It should be noted that the target uplink transmission is uplink transmission performed in the target time unit. Therefore, in the target time unit, if the radio frequency device has the signal to be sent to the extension device, the radio frequency device determines, according to the instruction, whether to perform the target uplink transmission.

Optionally, the radio frequency device may determine, at a moment of receiving the instruction, whether to perform the target uplink transmission according to the instruction. It may be understood that, when the radio frequency device receives the instruction, the radio frequency device may not have the signal to be sent to the extension device.

In a possible implementation, if in S330, the extension device sends the first instruction to only the radio frequency device that performs the target uplink transmission, in S340, the radio frequency device determines, based on whether the first instruction is received, whether to perform the target uplink transmission. If the radio frequency device receives the first instruction, the radio frequency device determines to perform the target uplink transmission. If the radio frequency device does not receive the first instruction, the radio frequency device determines not to perform the target uplink transmission.

In another possible implementation, if in S330, the extension device sends the second instruction to only the radio frequency device that does not perform the target uplink transmission, in S340, the radio frequency device determines, based on whether second first instruction is received, whether to perform the target uplink transmission. If the radio frequency device receives the second instruction, the radio frequency device determines not to perform the target uplink transmission. If the radio frequency device does not receive the second instruction, the radio frequency device determines to perform the target uplink transmission.

In still another possible implementation, if in S330, the extension device not only sends the first instruction to the radio frequency device that performs the target uplink transmission, but also sends the second instruction to the radio frequency device that does not perform the target uplink transmission, in S340, the radio frequency device determines, according to the received instruction, whether to perform the target uplink transmission. If the radio frequency device receives the first instruction, the radio frequency device determines to perform the target uplink transmission. If the radio frequency device receives the second instruction, the radio frequency device determines not to perform the target uplink transmission.

For example, if the first instruction and/or the second instruction sent by the extension device are/is the indication information, and the indication information includes an identifier of the radio frequency device that performs the target uplink transmission, in S340, the radio frequency device determines, based on whether the indication information includes the identifier of the radio frequency device, whether to perform the target uplink transmission. If the indication information includes the identifier of the radio frequency device, it is equivalent that the radio frequency device receives the first instruction, and the radio frequency device determines to perform the target uplink transmission. If the indication information does not include the identifier of the radio frequency device, it is equivalent that the radio frequency device receives the second instruction, and the radio frequency device determines not to perform the target uplink transmission.

For another example, if the first instruction and/or the second instruction sent by the extension device are/is the indication information, and the indication information includes an identifier of the radio frequency device that does not perform the target uplink transmission, in S340, the radio frequency device determines, based on whether the indication information includes the identifier of the radio frequency device, whether to perform the target uplink transmission. If the indication information includes the identifier of the radio frequency device, it is equivalent that the radio frequency device receives the second instruction, and the radio frequency device determines not to perform the target uplink transmission. If the indication information does not include the identifier of the radio frequency device, it is equivalent that the radio frequency device receives the first instruction, and the radio frequency device determines to perform the target uplink transmission.

For still another example, if the first instruction and/or the second instruction sent by the extension device are/is the indication information, and the indication information includes N bits, in S340, the radio frequency device determines, based on a bit corresponding to the radio frequency device in the N bits, whether to perform the target uplink transmission. If the bit corresponding to the radio frequency device in the N bits indicates to perform the target uplink transmission, it is equivalent that the radio frequency device receives the first instruction, and the radio frequency device determines to perform the target uplink transmission. If the bit corresponding to the radio frequency device in the N bits indicates not to perform the target uplink transmission, it is equivalent that the radio frequency device receives the second instruction, and the radio frequency device determines not to perform the target uplink transmission.

For still another example, if the first instruction and/or the second instruction sent by the extension device are/is the indication information, and the indication information includes N control fields, in S340, the radio frequency device determines, based on a control field corresponding to the radio frequency device in the N control fields, whether to perform the target uplink transmission. If the control field corresponding to the radio frequency device in the N control fields is on, it is equivalent that the radio frequency device receives the first instruction, and the radio frequency device determines to perform the target uplink transmission. If the control field corresponding to the radio frequency device in the N control fields is off, it is equivalent that the radio frequency device receives the second instruction, and the radio frequency device determines not to perform the target uplink transmission.

Optionally, if the instruction sent by the extension device to the radio frequency device in S330 indicates whether to perform the uplink transmission in each time unit in the at least one time unit, in S340, the radio frequency device determines, according to the instruction, whether to perform the uplink transmission in the target time unit. If the radio frequency device determines to perform the uplink transmission in the target time unit, the radio frequency device determines to perform the target uplink transmission. If the radio frequency device determines not to perform the uplink transmission in the target time unit, the radio frequency device determines not to perform the target uplink transmission.

For example, the radio frequency device is the RU #2, and the instruction received by the RU #2 indicates to perform the uplink transmission in the symbol #1 and the symbol #2, and indicates not to perform the uplink transmission in the symbol #3. If in the symbol #1, the RU #2 determines, according to the instruction, to perform the uplink transmission in the symbol #1, the RU #2 determines to send the signal to the extension device in the symbol #1. If in the symbol #2, the RU #2 determines, according to the instruction, to perform the uplink transmission in the symbol #2, the RU #2 determines to send the signal to the extension device in the symbol #2. If in the symbol #3, the RU #2 determines, according to the instruction, not to perform the uplink transmission in the symbol #3, the RU #2 determines not to send the signal to the extension device in the symbol #3.

Optionally, in S340, the radio frequency device determines, based on the instruction and power of the to-be-sent signal, whether to perform the target uplink transmission. If the radio frequency device receives the first instruction or does not receive the second instruction, and the power of the to-be-sent signal is greater than a power threshold, the radio frequency device determines to perform the target uplink transmission. If the radio frequency device receives the first instruction or does not receive the second instruction, and the power of the to-be-sent signal is less than or equal to the power threshold, the radio frequency device determines not to perform the target uplink transmission. If the radio frequency device receives the second instruction or does not receive the first instruction, and the power of the to-be-sent signal is greater than the power threshold, the radio frequency device determines to perform the target uplink transmission. If the radio frequency device receives the second instruction or does not receive the first instruction, and the power of the to-be-sent signal is less than or equal to the power threshold, the radio frequency device determines not to perform the target uplink transmission.

The power threshold is determined based on noise generated by a radio frequency device connected to the extension device. For example, the power threshold is noise of a radio frequency device that generates largest noise in a plurality of radio frequency devices connected to the extension device. For another example, the power threshold is an average value of noise generated by the plurality of radio frequency devices connected to the extension device.

Optionally, if the radio frequency device determines not to perform the target uplink transmission, the radio frequency device further performs at least one of the following: disabling an uplink radio frequency channel, disabling a low noise amplifier, disabling an interface between the radio frequency device and the extension device, clearing data for the interface between the radio frequency device and the extension device, disabling a power amplifier, and disabling a downlink radio frequency channel. Clearing the data for the interface between the radio frequency device and the extension device means that power of the data for the interface between the radio frequency device and the extension device is set to 0, or the power of the data for the interface between the radio frequency device and the extension device is set to a value lower than the power threshold.

For example, if the radio frequency device determines not to perform the target uplink transmission, the radio frequency device determines not to perform the target downlink transmission. If the radio frequency device determines not to perform the target downlink transmission, the radio frequency device disables the power amplifier and/or the downlink radio frequency channel.

For example, if the radio frequency device determines not to perform the target uplink transmission, the radio frequency device performs at least one of the foregoing operations in the target time unit. For example, the radio frequency device disables the uplink radio frequency channel and the low noise amplifier in the target time unit.

Optionally, if the radio frequency device determines to perform the target uplink transmission, the radio frequency device further performs at least one of the following: enabling the uplink radio frequency channel, enabling the low noise amplifier, enabling the interface between the radio frequency device and the extension device, enabling the power amplifier, and enabling the downlink radio frequency channel.

For example, if the radio frequency device determines to perform the target uplink transmission, the radio frequency device determines to perform the target downlink transmission. If the radio frequency device determines to perform the target downlink transmission, the radio frequency device enables the low noise amplifier and/or the downlink radio frequency channel.

For example, if the radio frequency device determines to perform the target uplink transmission, the radio frequency device performs at least one of the foregoing operations in the target time unit. For example, the radio frequency device enables the uplink radio frequency channel and the low noise amplifier in the target time unit.

Optionally, if the radio frequency device further receives an instruction indicating whether to perform the target downlink transmission, the radio frequency device further determines, according to the instruction indicating whether to perform the target downlink transmission, whether to perform the target downlink transmission.

Optionally, if the radio frequency device determines not to perform the target downlink transmission, the radio frequency device further performs at least one of the following: disabling the uplink radio frequency channel, disabling the low noise amplifier, disabling the interface between the radio frequency device and the extension device, clearing the data for the interface between the radio frequency device and the extension device, disabling the power amplifier, and disabling the downlink radio frequency channel.

Optionally, if the radio frequency device determines to perform the target downlink transmission, the radio frequency device further performs at least one of the following: enabling the uplink radio frequency channel, enabling the low noise amplifier, enabling the interface between the radio frequency device and the extension device, enabling the power amplifier, and enabling the downlink radio frequency channel.

S350: The extension device receives a signal from the at least one radio frequency device that performs the target uplink transmission. Correspondingly, in S350, the radio frequency device sends the signal to the extension device.

It should be noted that the extension device sends the second instruction to the radio frequency device that does not perform the target uplink transmission, and/or sends the first instruction to the radio frequency device that performs the target uplink transmission. Therefore, in S350, the radio frequency device that does not perform the target uplink transmission does not send a signal to the extension device. That is, the extension device receives the signal from only the at least one radio frequency device that performs the target uplink transmission.

S360: The extension device sends an uplink signal to the control device. Correspondingly, in S360, the control device receives the uplink signal from the extension device.

Specifically, S360 is the same as S240 in the method 200. For brevity, details are not described in this embodiment of this application again.

In this embodiment of this application, the control device determines, through the uplink signal polling or the downlink signal polling, the serving radio frequency device of the at least one terminal device that performs the target uplink transmission, and sends the indication information to the extension device, so that the extension device may send the first instruction to the radio frequency device that performs the target uplink transmission, and/or send the second instruction to the radio frequency device that does not perform the target uplink transmission. In this way, only the radio frequency device that performs the target uplink transmission send the signal to the extension device, to prevent the extension device from reporting, to the control device, the signal received from the radio frequency device that does not perform the target uplink transmission. It may be understood that because the radio frequency device that does not perform the target uplink transmission is not the serving radio frequency device of the terminal device that performs the target uplink transmission, the radio frequency device that does not perform the target uplink transmission cannot receive the uplink data from the terminal device that performs the target uplink transmission. Therefore, the signal sent by the radio frequency device that does not perform the target uplink transmission to the extension device is a noise floor generated by the radio frequency device. Therefore, the extension device does not report the signal received from the radio frequency device that does not perform the target uplink transmission, so that the uplink noise floor can be reduced.

Optionally, the method 300 further includes: The extension device receives a downlink signal from the control device. The extension device sends the downlink signal to the radio frequency device that performs the target downlink transmission. It should be noted that the extension device does not send the downlink signal to the radio frequency device that does not perform the target downlink transmission.

Optionally, the method 300 further includes: The extension device receives a downlink signal from the control device. The extension device sends the downlink signal to the radio frequency device that performs the target downlink transmission. Optionally, the extension device also sends the downlink signal to the radio frequency device that does not perform the target downlink transmission. Correspondingly, after receiving the downlink signal, the radio frequency device determines, according to the received instruction, whether to send the downlink signal. If the radio frequency device receives the instruction indicating to perform the target downlink transmission, or does not receive the instruction indicating not to perform the target downlink transmission, the radio frequency device determines to send the downlink signal. If the radio frequency device receives the instruction indicating not to perform the target downlink transmission, or does not receive the instruction indicating to perform the target downlink transmission, the radio frequency device determines not to send the downlink signal.

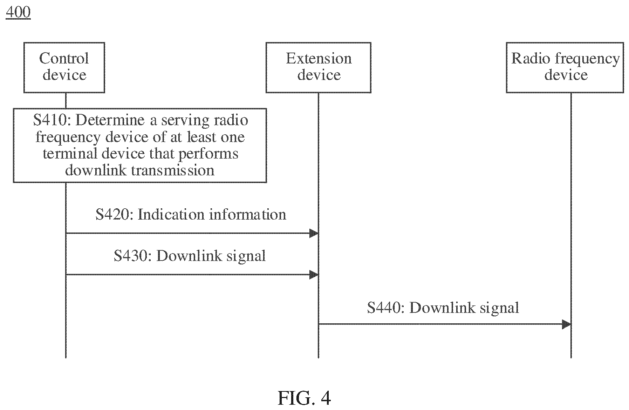

FIG. 4 is a schematic flowchart of a signal transmission method according to an embodiment of this application. As shown in FIG. 4, the method 400 may include S410 to S440. Steps are described in detail below.

S410: A control device determines a serving radio frequency device of at least one terminal device that performs downlink transmission.

For example, the control device may be a BBU, a BU, a CU, or a DU, and the radio frequency device may be an RRU, an RU, a pRRU, or an AAU.

For descriptions of the serving radio frequency device of the terminal device, refer to S210.

For example, the control device determines a serving radio frequency device of at least one terminal device that performs target downlink transmission. The target downlink transmission is downlink transmission performed in a target time unit. In other words, the terminal device that performs the target downlink transmission is a terminal device that performs the downlink transmission in the target time unit. For descriptions of a time unit and the target time unit, refer to S210.

For another example, the control device determines a serving radio frequency device of at least one terminal device that performs the downlink transmission in at least one time unit. The at least one time unit includes the target time unit for performing the target downlink transmission. It should be noted that, in different time units in the at least one time unit, terminal devices that perform the downlink transmission may be different.

For a manner in which the control device determines the serving radio frequency device of the at least one terminal device that performs the downlink transmission, refer to S210.

S420: The control device sends indication information to an extension device. Correspondingly, in S420, the extension device receives the indication information from the control device.

For example, the extension device may be a switch, a router, or an rHUB.

The indication information indicates a radio frequency device that performs the target downlink transmission. It may be understood that a downlink signal sent by the control device needs to be forwarded, to the at least one terminal device, by the serving radio frequency device of the at least one terminal device that performs the target downlink transmission. Therefore, the radio frequency device that performs the target downlink transmission and that is indicated by the indication information is the serving radio frequency device of the at least one terminal device that performs the target downlink transmission. That is, the indication information indicates the serving radio frequency device of the at least one terminal device that performs the target downlink transmission.

In a possible implementation, if the control device determines, in S410, the serving radio frequency device of the at least one terminal device that performs the target downlink transmission, the control device may determine the indication information based on the serving radio frequency device of the at least one terminal device that performs the target downlink transmission.

In another possible implementation, if in S410, the control device determines the serving radio frequency device of the at least one terminal device that performs the downlink transmission in the at least one time unit, the control device may determine, in the serving radio frequency device of the at least one terminal device that performs the downlink transmission in the at least one time unit, the serving radio frequency device of the at least one terminal device that performs the target downlink transmission. Then, the control device determines the indication information based on the serving radio frequency device of the at least one terminal device that performs the target downlink transmission.

A manner in which the indication information indicates the at least one radio frequency device that performs the target downlink transmission is the same as the manner in which the indication information indicates the at least one radio frequency device that performs the target downlink transmission in S220. For brevity, details are not described in this embodiment of this application.

Similarly, whether the indication information further indicates the target time unit for performing the target downlink transmission is not limited in this embodiment of this application either.

Optionally, if in S410, the control device determines the serving radio frequency device of the at least one terminal device that performs the downlink transmission in the at least one time unit, the indication information may indicate the at least one radio frequency device that performs the downlink transmission in the at least one time unit.

It may be understood that, because the downlink signal sent by the control device in the at least one time unit needs to be forwarded by the radio frequency device to the terminal device, the at least one radio frequency device indicated by the indication information is the serving radio frequency device of the at least one terminal device that performs the downlink transmission in the at least one time unit. For example, in S410, the control device determines that terminal devices that perform the downlink transmission in a symbol #1 to a symbol #3 include LTE #1 to LTE #3, and determines that the serving radio frequency device of the LTE #1 is an RU #2, and the serving radio frequency device of the LTE #2 and the UE #3 are an RU #4. In this case, the at least one radio frequency device indicated by the indication information includes the RU #2 and/or the RU #4.

For example, the at least one radio frequency device indicated by the indication information is configured to perform the downlink transmission in each time unit in the at least one time unit. That is, a same radio frequency device performs the downlink transmission in each time unit in the at least one time unit.

For another example, the indication information may indicate a radio frequency device that performs the downlink transmission in each time unit in the at least one time unit. A radio frequency device that performs the downlink transmission in a first time unit in the at least one time unit is a serving radio frequency device of a terminal device that performs the downlink transmission in the first time unit, and the first time unit is any time unit in the at least one time unit.

A manner in which the indication information indicates the at least one radio frequency device that performs the downlink transmission in the at least one time unit is the same as the manner in which the indication information indicates the at least one radio frequency device that performs the uplink transmission in the at least one time unit in S210. For brevity, details are not described in this embodiment of this application.

S430: The control device sends the downlink signal to the extension device. Correspondingly, in S430, the extension device receives the downlink signal from the control device.

It should be noted that the control device sends the downlink signal to the control device in the target time unit.

S440: The extension device sends, based on the indication information, the downlink signal to the at least one radio frequency device that performs the target downlink transmission.

If in S420, the indication information received by the extension device indicates only the at least one radio frequency device that performs the target downlink transmission, after receiving the downlink signal, the extension device directly sends the downlink signal to the radio frequency device indicated by the indication information. For example, if the indication information received by the extension device indicates only that the at least one radio frequency device that performs the target downlink transmission includes the RU #2, after receiving the downlink signal sent by the control device in the symbol #1, the extension device directly sends, to the RU #2, the downlink signal received from the control device.

If the indication information received by the extension device in S420 indicates the at least one radio frequency device that performs the downlink transmission in at least one time unit, and the at least one radio frequency device is configured to perform the downlink transmission in each time unit in the at least one time unit, after receiving the downlink signal, the extension device directly sends the downlink signal to the radio frequency device indicated by the indication information.

If the indication information received by the extension device in S420 indicates the radio frequency device that performs the downlink transmission in each time unit in the at least one time unit, after receiving the downlink signal, the extension device first determines, based on the indication information, the at least one radio frequency device that performs the target downlink transmission in the target time unit, and sends the downlink signal to the at least one radio frequency device that performs the target downlink transmission in the target time unit. For example, the indication information received by the extension device indicates that the radio frequency device that performs the downlink transmission in the symbol #1 includes the RU #2, and the radio frequency devices that perform the downlink transmission in the symbol #2 include the RU #2 and the RU #4. If in S430, the extension device receives the downlink signal sent by the control device in the symbol #1, the extension device first determines, based on the indication information, that the RU #2 performs the target downlink transmission in the symbol #1. Then, the extension device sends, to the RU #2, the downlink signal received from the control device. Alternatively, if in S430, the extension device receives the downlink signal sent by the control device in the symbol #2, the extension device first determines, based on the indication information, that the RU #2 and the RU #4 perform the target downlink transmission in the symbol #2. Then, the extension device sends, to the RU #2 and the RU #4, the downlink signal received from the control device.

Correspondingly, after receiving the downlink signal from the extension device, the radio frequency device that performs the target downlink transmission sends the downlink signal to a terminal device in a coverage area.

It should be noted that, in S440, the extension device does not send the downlink signal to the radio frequency device that performs the target downlink transmission.

In this embodiment of this application, the control device determines, through uplink signal polling or the downlink signal polling, the serving radio frequency device of the at least one terminal device configured to perform the target downlink transmission, and sends the indication information to the extension device, so that the extension device sends, based on the indication information, the downlink signal to the radio frequency device that performs the target downlink transmission. In this way, only the radio frequency device that performs the target downlink transmission can receive the downlink signal. It may be understood that, because the radio frequency device that does not perform the target downlink transmission is not the serving radio frequency device of the terminal device that performs the target downlink transmission, the terminal device that performs the target downlink transmission cannot receive a downlink signal from the radio frequency device that does not perform the target downlink transmission. Therefore, when the radio frequency device that does not perform the target downlink transmission cannot receive the downlink signal, invalid sending can be avoided.

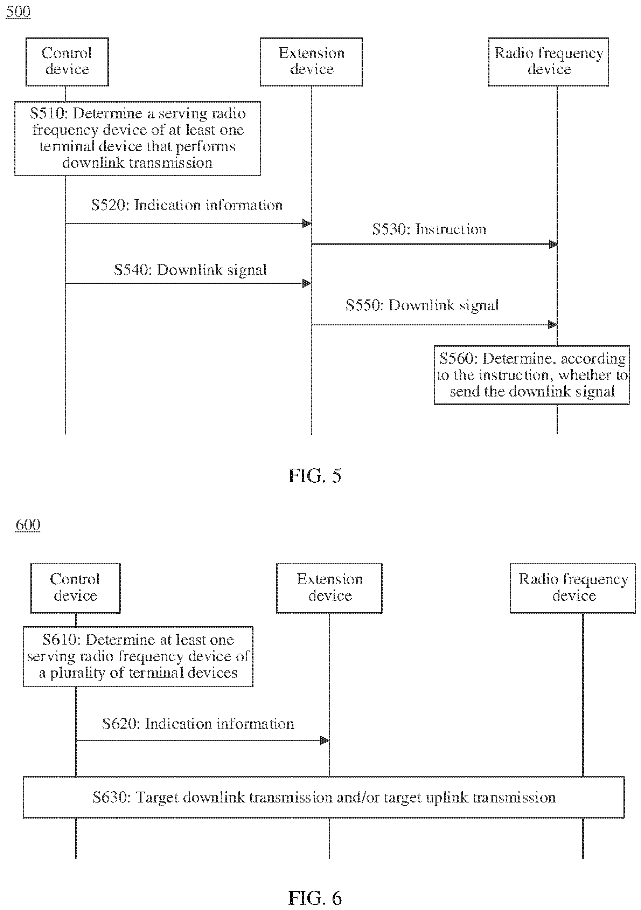

FIG. 5 is a schematic flowchart of a signal transmission method according to another embodiment of this application. As shown in FIG. 5, the method 500 may include S510 to S560. Steps are described in detail below.

S510: A control device determines a serving radio frequency device of at least one terminal device that performs downlink transmission.

Specifically, S510 is the same as S410 in the method 400. For brevity, details are not described in this embodiment of this application again.

S520: The control device sends indication information to an extension device. Correspondingly, in S520, the extension device receives the indication information from the control device.

Specifically, S520 is the same as S420 in the method 400. For brevity, details are not described in this embodiment of this application again.

S530: The extension device sends an instruction to a radio frequency device. Correspondingly, in S530, the radio frequency device receives the instruction from the extension device.

The instruction indicates whether to perform target downlink transmission.

In a possible implementation, that the extension device sends an instruction to a radio frequency device includes: The extension device sends, to a radio frequency device that performs the target downlink transmission, an instruction indicating to perform the target downlink transmission, and/or sends, to a radio frequency device that does not perform the target downlink transmission, an instruction indicating not to perform the target downlink transmission. For ease of description, the instruction indicating to perform the target downlink transmission is denoted as a third instruction below, and the instruction indicating not to perform the target downlink transmission is denoted as a fourth instruction below.

For example, if the indication information received by the extension device in S520 indicates at least one radio frequency device that performs the target downlink transmission, or the indication information received by the extension device indicates at least one radio frequency device that performs downlink transmission in at least one time unit, and the at least one radio frequency device performs the downlink transmission in each time unit in the at least one time unit, the extension device may send the third instruction to a radio frequency device indicated by the indication information, and/or send the fourth instruction to a radio frequency device not indicated by the indication information.

For another example, if the indication information received by the extension device in S520 indicates a radio frequency device that performs the downlink transmission in each time unit in the at least one time unit, the extension device first determines, based on the indication information, a radio frequency device that performs the target downlink transmission in a target time unit, and sends the third instruction to the radio frequency device that performs the target downlink transmission in the target time unit, and/or sends the fourth instruction to a radio frequency device that does not perform the target downlink transmission in the target time unit.

The third instruction is not limited in this embodiment of this application. For example, the extension device may generate the first instruction based on the indication information. For example, the third instruction may be one-bit information. For another example, the third instruction is the indication information. To be specific, the extension device sends the received indication information to the radio frequency device that performs the target downlink transmission. Similarly, the fourth instruction may also be generated by the extension device, or may be the indication information.

It should be noted that although the third instruction indicates to perform the target downlink transmission, whether the third instruction further indicates the target time unit for performing the target downlink transmission is not limited in this embodiment of this application.

For example, the third instruction does not indicate the target time unit. For example, the radio frequency device may consider by default that the target time unit is a time unit in which the extension device receives the third instruction. In other words, the radio frequency device may consider by default that the target downlink transmission is downlink transmission performed in the time unit in which the radio frequency device receives the third instruction. For another example, the radio frequency device may consider by default that the target time unit is a time unit following the time unit in which the radio frequency device receives the third instruction. In other words, the radio frequency device may consider by default that the target downlink transmission is uplink transmission performed in the time unit following the time unit in which the radio frequency device receives the third instruction.

For another example, the third instruction indicates the target time unit. For example, if the time unit is a slot, the third instruction further includes a slot number of a target slot.

Similarly, whether the fourth instruction indicates the target time unit is not limited in this embodiment of this application either.

Optionally, if the indication information received by the extension device in S520 indicates the radio frequency device that performs the downlink transmission in each time unit in the at least one time unit, the instruction sent by the extension device to the radio frequency device in S530 may indicate whether to perform the downlink transmission in each time unit in the at least one time unit. For example, the indication information received by the extension device indicates that the radio frequency device that performs uplink transmission in a symbol #1 includes an RU #2, and the radio frequency devices that perform the uplink transmission in a symbol #2 include the RU #2 and an RU #4. In this case, the instruction sent by the extension device to an RU #1 and an RU #3 in S530 indicates not to perform the downlink transmission in the symbol #1 and the symbol #2, the instruction sent by the extension device to the RU #2 indicates to perform the downlink transmission in the symbol #1 and the symbol #2, and the instruction sent by the extension device to the RU #4 indicates to perform the downlink transmission in the symbol #2, and not to perform the downlink transmission in the symbol #1.

S540: The control device sends a downlink signal to the extension device. Correspondingly, in S540, the extension device receives the downlink signal from the control device.

It should be noted that the control device sends the downlink signal to the control device in the target time unit.

S550: The extension device sends the downlink signal to the radio frequency device. Correspondingly, in S550, the radio frequency device receives the downlink signal from the extension device.

It should be noted that, in S550, the control device sends downlink signals to all connected radio frequency devices. To be specific, the control device not only sends the downlink signal to the radio frequency device that performs the target downlink transmission, but also sends the downlink signal to the radio frequency device that does not perform the target downlink transmission.

Optionally, if the extension device parses the indication information received from the control device, and determines, based on the indication information, the radio frequency device that performs the target downlink transmission, in S550, the extension device may send the downlink signal to only the radio frequency device that performs the target downlink transmission.

S560: The radio frequency device determines, according to the instruction, whether to perform the target downlink transmission.

After receiving the downlink signal from the extension device, the radio frequency device determines, according to the instruction, whether to perform the target downlink transmission. If the radio frequency device determines, according to the instruction, to perform the target downlink transmission, the radio frequency device sends the downlink signal. If the radio frequency device determines, according to the instruction, not to perform the target downlink transmission, the radio frequency device does not send the downlink signal.

Optionally, the radio frequency device may determine, at a moment of receiving the instruction, whether to perform the target downlink transmission according to the instruction. It may be understood that when the radio frequency device receives the instruction, the radio frequency device may not receive the downlink signal.

In a possible implementation, if in S530, the extension device sends the third instruction to only the radio frequency device that performs the target downlink transmission, in S560, the radio frequency device determines, based on whether the third instruction is received, whether to perform the target downlink transmission. If the radio frequency device receives the third instruction, the radio frequency device determines to perform the target downlink transmission. If the radio frequency device does not receive the third instruction, the radio frequency device determines not to perform the target downlink transmission.

In another possible implementation, if in S530, the extension device sends the fourth instruction to only the radio frequency device that does not perform the target downlink transmission, in S560, the radio frequency device determines, based on whether the fourth instruction is received, whether to perform the target downlink transmission. If the radio frequency device receives the fourth instruction, the radio frequency device determines not to perform the target downlink transmission. If the radio frequency device does not receive the fourth instruction, the radio frequency device determines to perform the target downlink transmission.

In still another possible implementation, if in S530, the extension device not only sends the third instruction to the radio frequency device that performs the target downlink transmission, but also sends the fourth instruction to the radio frequency device that does not perform the target downlink transmission, in S560, the radio frequency device determines, according to the received instruction, whether to perform the target downlink transmission. If the radio frequency device receives the third instruction, the radio frequency device determines to perform the target downlink transmission. If the radio frequency device receives the fourth instruction, the radio frequency device determines not to perform the target downlink transmission.

For example, if the third instruction and/or the fourth instruction sent by the extension device are/is the indication information, and the indication information includes an identifier of the radio frequency device that performs the target downlink transmission, in S560, the radio frequency device determines, based on whether the indication information includes the identifier of the radio frequency device, whether to perform the target downlink transmission. If the indication information includes the identifier of the radio frequency device, it is equivalent that the radio frequency device receives the third instruction, and the radio frequency device determines to perform the target downlink transmission. If the indication information does not include the identifier of the radio frequency device, it is equivalent that the radio frequency device receives the fourth instruction, and the radio frequency device determines not to perform the target downlink transmission.

For another example, if the third instruction and/or the fourth instruction sent by the extension device are/is the indication information, and the indication information includes an identifier of the radio frequency device that does not perform the target downlink transmission, in S560, the radio frequency device determines, based on whether the indication information includes the identifier of the radio frequency device, whether to perform the target downlink transmission. If the indication information includes the identifier of the radio frequency device, it is equivalent that the radio frequency device receives the third instruction, and the radio frequency device determines not to perform the target downlink transmission. If the indication information does not include the identifier of the radio frequency device, it is equivalent that the radio frequency device receives the fourth instruction, and the radio frequency device determines to perform the target downlink transmission.

For still another example, if the third instruction and/or the fourth instruction sent by the extension device are/is the indication information, and the indication information includes N bits, in S560, the radio frequency device determines, based on a bit corresponding to the radio frequency device in the N bits, whether to perform the target downlink transmission. If the bit corresponding to the radio frequency device in the N bits indicates to perform the target downlink transmission, it is equivalent that the radio frequency device receives the third instruction, and the radio frequency device determines to perform the target downlink transmission. If the bit corresponding to the radio frequency device in the N bits indicates not to perform the target downlink transmission, it is equivalent that the radio frequency device receives the fourth instruction, and the radio frequency device determines not to perform the target downlink transmission.

For still another example, if the third instruction and/or the fourth instruction sent by the extension device are/is the indication information, and the indication information includes N control fields, in S560, the radio frequency device determines, based on a control field corresponding to the radio frequency device in the N control fields, whether to perform the target downlink transmission. If the control field corresponding to the radio frequency device in the N control fields is on, it is equivalent that the radio frequency device receives the third instruction, and the radio frequency device determines to perform the target downlink transmission. If the control field corresponding to the radio frequency device in the N control fields is off, it is equivalent that the radio frequency device receives the fourth instruction, and the radio frequency device determines not to perform the target downlink transmission.

Optionally, if the instruction sent by the extension device to the radio frequency device in S530 indicates whether to perform the downlink transmission in each time unit in the at least one time unit, in S560, the radio frequency device determines, according to the instruction, whether to perform the downlink transmission in the target time unit. If the radio frequency device determines to perform the downlink transmission in the target time unit, the radio frequency device determines to perform the target downlink transmission. If the radio frequency device determines not to perform the downlink transmission in the target time unit, the radio frequency device determines not to perform the target downlink transmission.

Optionally, if the radio frequency device determines not to perform the target downlink transmission, the radio frequency device further performs at least one of the following: disabling an uplink radio frequency channel, disabling a low noise amplifier, disabling an interface between the radio frequency device and the extension device, disabling a power amplifier, and disabling a downlink radio frequency channel.

For example, if the radio frequency device determines not to perform the target downlink transmission, the radio frequency device determines not to perform target uplink transmission. If the radio frequency device determines not to perform target uplink transmission, the radio frequency device performs at least one of the following: disabling the low noise amplifier, disabling the uplink radio frequency channel, and disabling the interface between the radio frequency device and the extension device.

For example, if the radio frequency device determines not to perform the target downlink transmission, the radio frequency device performs at least one of the foregoing operations in the target time unit. For example, the radio frequency device disables the downlink radio frequency channel and the power amplifier in the target time unit.

Optionally, if the radio frequency device determines to perform the target downlink transmission, the radio frequency device further performs at least one of the following: enabling the uplink radio frequency channel, enabling the low noise amplifier, enabling the interface between the radio frequency device and the extension device, enabling the power amplifier, and enabling the downlink radio frequency channel.

For example, if the radio frequency device determines to perform the target downlink transmission, the radio frequency device determines to perform the target uplink transmission. If the radio frequency device determines to perform the target uplink transmission, the radio frequency device performs at least one of the following: enabling the uplink radio frequency channel, enabling the low noise amplifier, and enabling the interface between the radio frequency device and the extension device.

For example, if the radio frequency device determines to perform the target downlink transmission, the radio frequency device performs at least one of the foregoing operations in the target time unit. For example, the radio frequency device enables the downlink radio frequency channel and the power amplifier in the target time unit.

In this embodiment of this application, the control device determines, through uplink signal polling or downlink signal polling, the serving radio frequency device of the at least one terminal device that performs the target downlink transmission, and sends the indication information to the extension device, so that the extension device may send, to the radio frequency device that performs the target downlink transmission, the instruction indicating to perform the target downlink transmission, and/or send, to the radio frequency device that does not perform the target downlink transmission, the instruction indicating not to perform the target downlink transmission. In this way, only the radio frequency device that performs the target downlink transmission can send the downlink signal. It may be understood that, because the radio frequency device that does not perform the target downlink transmission is not the serving radio frequency device of the terminal device that performs the target downlink transmission, the terminal device that performs the target downlink transmission cannot receive a downlink signal from the radio frequency device that does not perform the target downlink transmission. Therefore, when the radio frequency device that does not perform the target downlink transmission does not send the downlink signal, invalid sending can be avoided.

FIG. 6 is a schematic flowchart of a signal transmission method according to an embodiment of this application. As shown in FIG. 6, the method 600 may include S610 to S630. The steps are described in detail below.

S610: A control device determines at least one serving radio frequency device of a plurality of terminal devices.

For example, the control device may be a BBU, a BU, a CU, or a DU, and the radio frequency device may be an RRU, an RU, a pRRU, or an AAU.

For descriptions of the serving radio frequency device of the terminal device, refer to S210. For descriptions of determining the serving radio frequency device of the terminal device, refer to S210.

S620: The control device sends indication information to an extension device. Correspondingly, in S620, the extension device receives the indication information from the control device.

For example, the extension device may be a switch, a router, or an rHUB.

The indication information indicates a radio frequency device that performs target signal transmission. The target signal transmission includes target uplink transmission and/or target downlink transmission. For descriptions of the target uplink transmission, refer to S210. For descriptions of the target downlink transmission, refer to S410.

The radio frequency device that performs the target signal transmission is not limited in this embodiment of this application.

In a possible implementation, the radio frequency device that performs the target signal transmission includes a radio frequency device, where a quantity of terminal devices served by the radio frequency device exceeds a threshold. That is, the control device determines the radio frequency device as the radio frequency device that performs the target signal transmission, where the quantity of terminal devices served by the radio frequency device exceeds the threshold. The threshold may be determined based on a total quantity of terminal devices in a coverage area of the control device. For example, the threshold may be 30% of the total quantity of terminal devices in the coverage area of the control device, or the threshold may be 20% of the total quantity of terminal devices in the coverage area of the control device.

In another possible implementation, the radio frequency device that performs the target signal transmission includes a radio frequency device that serves a largest quantity of terminal devices. That is, the control device determines the radio frequency device that serves the largest quantity of terminal devices as the radio frequency device that performs the target signal transmission.

Optionally, the radio frequency device that performs the target signal transmission further includes a radio frequency device that serves a high-priority terminal device. That is, the control device may further determine the radio frequency device that serves the high-priority terminal device as the radio frequency device that performs the target signal transmission.

A manner in which the indication information indicates the radio frequency device that performs the target signal transmission is the same as the manner in which the indication information indicates the radio frequency device that performs the target uplink transmission in S220. For brevity, details are not described in this embodiment of this application.

It should be noted that although the target signal transmission is signal transmission performed in a target time unit, whether the indication information further indicates the target time unit is not limited in this embodiment of this application.

For example, the indication information does not indicate the target time unit. For example, the extension device may consider by default that the target time unit is a time unit in which the extension device receives the indication information. In other words, the extension device may consider by default that the target signal transmission is signal transmission performed in the time unit in which the extension device receives the indication information. For example, if the time unit is an hour, and the extension device receives the indication information at 08:00 on January 1, 2021, the extension device may determine that the target time unit is from 08:00 on January 1, 2021 to 09:00 on January 1, 2021. In other words, the extension device may determine that the target signal transmission is signal transmission performed from 08:00 on January 1, 2021 to 09:00 on January 1, 2021. For another example, the extension device may consider by default that the target time unit is a time unit following the time unit in which the extension device receives the indication information. In other words, the extension device may consider by default that the target signal transmission is signal transmission performed in the time unit following the time unit in which the extension device receives the indication information. For example, if the time unit is a minute, and the extension device receives the indication information at 08:00 on January 1, 2021, the extension device may determine that the target time unit is from 08:01 on January 1, 2021 to 08:02 on January 1, 2021. In other words, the extension device may determine that the target signal transmission is signal transmission performed from 08:01 on January 1, 2021 to 08:02 on January 1, 2021. For still another example, the extension device may consider by default that the target time unit is from a moment at which the extension device receives the indication information to a moment at which the extension device receives the indication information next time.

For another example, the indication information indicates the target time unit. For example, if the time unit is a slot, the indication information further includes a slot number of a target slot. It may be understood that, when the indication information indicates the target time unit, the indication information indicates a radio frequency device that performs the target signal transmission in the target time unit.

Optionally, the indication information indicates at least one radio frequency device that performs signal transmission in at least one time unit. The at least one time unit includes the target time unit for performing the target signal transmission.

For example, the at least one radio frequency device indicated by the indication information performs the signal transmission in each time unit in the at least one time unit. That is, a same radio frequency device performs the signal transmission in each time unit in the at least one time unit. For example, the at least one radio frequency device indicated by the indication information includes the radio frequency device, where the quantity of terminal devices served by the radio frequency device that exceeds the threshold. For another example, the at least one radio frequency device indicated by the indication information includes the radio frequency device that serves the largest quantity of terminal devices.

For another example, the indication information may indicate a radio frequency device that performs the signal transmission in each time unit in the at least one time unit. Radio frequency devices that perform the signal transmission in different time units in the at least one time unit may be different.

For example, the at least one time unit indicated by the indication information is in a one-to-one correspondence with at least one radio frequency device connected to the extension device, and each radio frequency device performs the signal transmission in a time unit corresponding to the radio frequency device. To be specific, the control device determines the at least one time unit based on a quantity of the at least one radio frequency device connected to the extension device, and determines that each radio frequency device in the at least one radio frequency device performs the signal transmission in one time unit in the at least one time unit, and different radio frequency devices in the at least one radio frequency device perform the signal transmission in the different time units. For example, a plurality of radio frequency devices connected to the extension device include an RU #1 to an RU #3, and three time units indicated by the indication information include a time unit #1 to a time unit #3. In addition, the indication information further indicates that the RU #1 performs the signal transmission in the time unit #1, the RU #2 performs the signal transmission in the time unit #2, and the RU #3 performs the signal transmission in the time unit #3.

For another example, the at least one time unit indicated by the indication information is in a one-to-one correspondence with the at least one serving radio frequency device, and each serving radio frequency device performs the signal transmission in a time unit corresponding to the serving radio frequency device. The at least one serving radio frequency device is a radio frequency device that serves at least one terminal device and that is in the plurality of radio frequency devices connected to the extension device. To be specific, the control device determines the at least one time unit based on a quantity of the at least one serving radio frequency device connected to the extension device, and determines that each serving radio frequency device in the at least one serving radio frequency device performs the signal transmission in one time unit in the at least one time unit, and different serving radio frequency devices in the at least one serving radio frequency device perform the signal transmission in the different time units. For example, the plurality of radio frequency devices connected to the extension device include the RU #1 to the RU #3. In S610, the control device determines that the RU #1 serves UE #1 to UE #3, the RU #2 serves UE #4, and the RU #3 does not serve any UE. In this case, the indication information indicates two time units (namely, the time unit #1 and the time unit #2), and the indication information further indicates that the RU #1 performs the signal transmission in the time unit #1, the RU #2 performs the signal transmission in the time unit #2, and the RU #3 performs the signal transmission in the time unit #3.

For still another example, the at least one time unit indicated by the indication information is corresponding to the at least one serving radio frequency device, and a larger quantity of terminal devices served by the serving radio frequency device indicates a larger quantity of time units used by the serving radio frequency device to perform the signal transmission. For example, a first radio frequency device is a radio frequency device that performs the signal transmission in M time units in the at least one time unit, and a second radio frequency device is a radio frequency device that performs the signal transmission in N time units in the at least one time unit. If a quantity of terminal devices served by the first radio frequency device is greater than a quantity of terminal devices served by the second radio frequency device, M>N; or if a quantity of terminal devices served by the first radio frequency device is less than a quantity of terminal devices served by the second radio frequency device, M<N. M and N are positive integers. That is, when the at least one time unit is fixed, the control device allocates, based on a quantity of terminal devices served by each serving radio frequency device, a quantity of time units for performing the signal transmission to each serving radio frequency device.

For example, the at least one radio frequency device connected to the extension device includes the RU #1 to the RU #3. In S610, the control device determines that the RU #1 serves the UE #1 to the UE #3, the RU #2 serves the UE #4, and the RU #3 does not serve any UE. In this case, when the at least one time unit always includes three time units, the control device may allocate two time units (for example, denoted as the time unit #1 and a time unit 32) to the RU #1 to perform the signal transmission, and allocate one time unit (for example, denoted as the time unit #3) to the RU #2 to perform the signal transmission. Further, the indication information sent by the control device to the extension device indicates the time unit #1 to the time unit #3, and the indication information further indicates that the RU #1 performs the signal transmission in the time unit #1 and the time unit#2, and the RU #2 performs the signal transmission in the time unit #3.

For example, when the at least one time unit is fixed, duration determined based on the at least one time unit may be 10 seconds, 1 minute, 10 minutes, 30 minutes, or the like.

S630: The control device schedules a terminal device served by the at least one radio frequency device that performs the target signal transmission to perform the target signal transmission.

In a possible implementation, the target signal transmission includes the target uplink transmission. In this case, in S630, the control device may schedule a terminal device served by the at least one radio frequency device that performs the target uplink transmission to perform the target uplink transmission. A method for scheduling, by the control device, the terminal device served by the at least one radio frequency device that performs the target uplink transmission to perform the target uplink transmission may include S230 and S240. Alternatively, a method for scheduling, by the control device, the terminal device served by the at least one radio frequency device that performs the target uplink transmission to perform the target uplink transmission may include S330 to S360.

In another possible implementation, the target signal transmission includes the target downlink transmission. In this case, in S630, the control device may schedule a terminal device served by the at least one radio frequency device that performs the target downlink transmission to perform the target downlink transmission. A method for scheduling, by the control device, the terminal device served by the at least one radio frequency device that performs the target downlink transmission to perform the target downlink transmission may include S430 and S440. Alternatively, a method for scheduling, by the control device, the terminal device served by the at least one radio frequency device that performs the target uplink transmission to perform the target uplink transmission may include S530 to S560.

In still another possible implementation, the target signal transmission includes the target downlink transmission and the target uplink transmission. In this case, in S630, the control device may schedule the terminal device served by the at least one radio frequency device that performs the target signal transmission to perform the target downlink transmission and/or perform the target uplink transmission.

In this embodiment of this application, the control device indicates, by using the indication information, the radio frequency device that performs the target signal transmission, and schedules the terminal device served by the radio frequency device that performs the target signal transmission to perform the target signal transmission, to improve signal transmission performance.

For example, for downlink transmission, the extension device may send a downlink signal to only a radio frequency device that performs the target downlink transmission, or send, to the radio frequency device that performs the target downlink transmission, an instruction indicating not to perform the target downlink transmission; or send, to a radio frequency device that does not perform the target downlink transmission, an instruction indicating not to perform the target downlink transmission, so that only the radio frequency device that performs the target downlink transmission sends the downlink signal. It may be understood that the control device does not schedule a terminal device served by the radio frequency device that does not perform the target downlink transmission to perform the target downlink transmission. Therefore, invalid sending can be avoided when the radio frequency device that does not perform the target downlink transmission does not send the downlink signal.

For another example, for uplink transmission, the extension device may determine, based on the indication information, the radio frequency device that performs the target uplink transmission, or send, to the radio frequency device that performs the target uplink transmission, an instruction indicating to perform the target uplink transmission; or send, to a radio frequency device that does not perform the target uplink transmission, an instruction indicating not to perform the target uplink transmission, so that the extension device can report, to the control device, only a signal received from the radio frequency device that performs the target uplink transmission. It may be understood that the control device does not schedule a terminal device served by the radio frequency device that does not perform the target uplink transmission. Therefore, a signal sent by the radio frequency device that does not perform the target uplink transmission to the extension device is a noise floor generated by the radio frequency device. Therefore, the extension device reports only the signal received from the radio frequency device that performs the target uplink transmission, so that the uplink noise floor can be reduced.

In addition, if the radio frequency device that performs the target signal transmission and that is indicated by the indication information is a part of the plurality of radio frequency devices connected to the extension device, power consumption can be reduced when only the existing part of the radio frequency devices perform the target signal transmission.

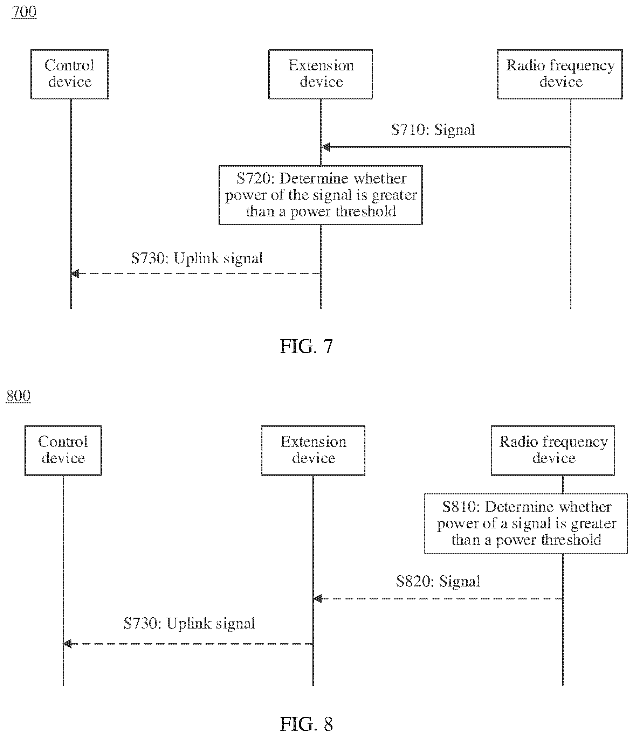

FIG. 7 is a schematic flowchart of a signal transmission method according to an embodiment of this application. As shown in FIG. 7, the method 700 includes S710 to S730.

S710: An extension device receives a signal from a radio frequency device. Correspondingly, in S710, the radio frequency device sends the signal to the extension device.

For example, the extension device may be a switch, a router, or an rHUB, and the radio frequency device may be an RRU, an RU, a pRRU, or an AAU.

For example, the extension device receives a signal from one radio frequency device.

For another example, the extension device receives signals from a plurality of radio frequency devices.

S720: The extension device determines whether power of the signal is greater than a power threshold.

If the extension device receives the signals from the plurality of radio frequency devices, the extension device determines whether power of the signal received from each radio frequency device is greater than the power threshold. For example, if the extension device receives a signal from an RU #1 and a signal from an RU #2, the extension device determines whether the signal from the RU #1 is greater than the power threshold, and determines whether the signal from the RU #2 is greater than the power threshold.

The power threshold is determined based on noise generated by a radio frequency device connected to the extension device. For example, the power threshold is noise of a radio frequency device that generates largest noise in a plurality of radio frequency devices connected to the extension device. For example, in the RU #1 to an RU #4 connected to the extension device, noise generated by the RU #1 is the largest. In this case, the power threshold is equal to the noise generated by the RU #1. For another example, the power threshold is an average value of noise generated by the plurality of radio frequency devices connected to the extension device. For example, if the extension device is connected to the RU #1 to the RU #4, the power threshold is equal to an average value of noise generated by the RU #1 to the RU #4.

S730: The extension device sends an uplink signal to a control device. Correspondingly, in S730, the control device receives the uplink signal from the extension device.

For example, the control device may be a BBU, a BU, a CU, or a DU.

The uplink signal is determined based on a signal received from at least one radio frequency device, and power of the signal received from the at least one radio frequency device is greater than the power threshold.

For example, if the extension device receives a signal from a radio frequency device in S710, when power of the signal from the radio frequency device is greater than the power threshold, the extension device sends, to the control device, the signal received from the radio frequency device. That is, the uplink signal sent by the extension device to the control device is the signal received from the radio frequency device. If the power of the signal from the radio frequency device is equal to or less than the power threshold, the extension device does not send the signal to the control device.

For another example, if the extension device receives signals from a plurality of radio frequency devices in S710, the extension device determines the uplink signal based on the signal received from at least one radio frequency device in the plurality of radio frequency devices, and sends the uplink signal to the control device. Power of the signal received by the extension device from the at least one radio frequency device in the plurality of radio frequency devices is greater than the power threshold. For example, if the at least one radio frequency device includes two or more radio frequency devices, the extension device performs radio frequency combination on signals received from the at least one radio frequency device, to obtain an uplink signal.

For example, if the extension device receives a signal from an RU #1 and a signal from an RU #2, and the extension device determines that the signal from the RU #1 is greater than the power threshold, and determines that the signal from the RU #2 is greater than the power threshold, the extension device performs radio frequency combination on the signal from the RU #1 and the signal from the RU #2 to determine an uplink signal, and sends the uplink signal to the control device.

In this embodiment of this application, because the power threshold is determined based on noise generated by a radio frequency device connected to the extension device, the extension device reports only a signal whose power is greater than the power threshold to the control device, and does not report a signal whose power is less than or equal to the power threshold. This helps reduce an uplink noise floor.

Optionally, the method 700 further includes: The extension device receives a downlink signal from the control device. If the power of the signal received by the extension device from the radio frequency device is greater than the power threshold, the extension device sends the downlink signal to the radio frequency device; or if the power of the signal received by the extension device from the radio frequency device is less than or equal to the power threshold, the extension device does not send the downlink signal to the radio frequency device.

Optionally, if power of at least one signal received by the extension device from the radio frequency device within predefined duration is less than or equal to the power threshold, the extension device does not send the downlink signal to the radio frequency device.

It may be understood that if the power of the signal received by the extension device from the radio frequency device is less than or equal to the power threshold, it indicates that the signal sent by the radio frequency device to the extension device is noise generated by the radio frequency device instead of uplink data received from a terminal device. Since the radio frequency device does not receive the uplink data from the terminal device, it indicates that no terminal device may exist in a coverage area of the radio frequency device. If no terminal device exists in the coverage area of the radio frequency device, the extension device sends the downlink signal to the radio frequency device, and the radio frequency device sends the downlink signal received from the extension device. This may cause invalid sending. Therefore, the invalid sending can be avoided according to this embodiment of this application.

FIG. 8 is a schematic flowchart of a signal transmission method according to an embodiment of this application. As shown in FIG. 8, the method 800 includes S810 to S830.

S810: A radio frequency device determines whether power of a signal is greater than a power threshold.

For example, the radio frequency device may be an RRU, an RU, a pRRU, or an AAU.

It should be noted that, in S810, the radio frequency device determines whether power of a signal to be sent to an extension device is greater than the power threshold. For descriptions of the power threshold, refer to S720.

Optionally, if the radio frequency device determines that the power of the signal is less than or equal to the power threshold, the radio frequency device further performs at least one of the following: disabling an uplink radio frequency channel, disabling a low noise amplifier, disabling an interface between the radio frequency device and the extension device, and clearing data for the interface.

Optionally, if the radio frequency device determines that the power of the signal is less than or equal to the power threshold, the radio frequency device further performs at least one of the following: disabling a power amplifier and disabling a downlink radio frequency channel.

Optionally, if power of signals to be sent by the radio frequency device to the extension device are all less than or equal to the power threshold within predefined duration, the radio frequency device disables the power amplifier and/or disables the downlink radio frequency channel.

S820: The extension device receives the signal from the radio frequency device. Correspondingly, in S820, the radio frequency device sends the signal to the extension device.

For example, the extension device may be a switch, a router, or an rHUB.

If the radio frequency device determines that the power of the signal is greater than the power threshold, the radio frequency device sends the signal to the extension device; or if the radio frequency device determines that the power of the signal is less than or equal to the power threshold, the radio frequency device does not send the signal to the extension device.

S830: The extension device sends an uplink signal to a control device. Correspondingly, in S830, the control device receives the uplink signal from the extension device.

For example, the control device may be a BBU, a BU, a CU, or a DU.

The uplink signal is determined based on a signal received from at least one radio frequency device.

In this embodiment of this application, the power threshold is determined based on noise generated by a radio frequency device connected to the extension device. Therefore, the radio frequency device sends the signal to the extension device only when the power of the signal to be sent to the extension device is greater than the power threshold. This helps reduce an uplink noise floor, and reduce uplink power consumption.

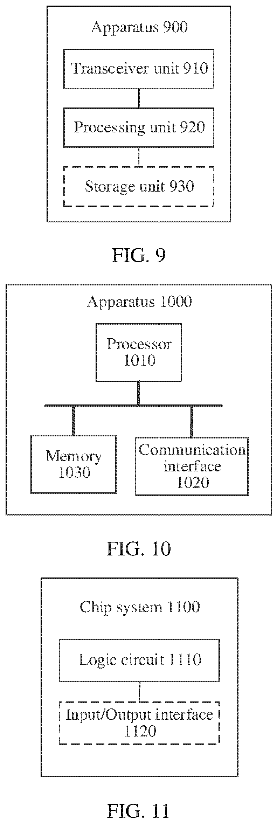

The methods provided in embodiments of this application are described in detail above with reference to FIG. 2 to FIG. 8. Apparatuses provided in embodiments of this application are described in detail below with reference to FIG. 9 to FIG. 11. It should be understood that descriptions of apparatus embodiments correspond to descriptions of the method embodiments. Therefore, for content that is not described in detail, refer to the foregoing method embodiment. For brevity, details are not described herein again.

FIG. 9 is a schematic block diagram of an apparatus 900 according to an embodiment of this application. As shown in the figure, the apparatus 900 may include a transceiver unit 910 and a processing unit 920.

In a possible design, the apparatus 900 may be the extension device in the foregoing method embodiment, or may be a chip configured to implement functions of the extension device in the foregoing method embodiment.

It should be understood that the apparatus 900 may correspond to the extension device in the method 200, the method 300, the method 400, the method 500, the method 600, the method 700, or the method 800 according to embodiments of this application. The apparatus 900 may include a unit configured to perform the method performed by the extension device in the method 200 in FIG. 2, the method 300 in FIG. 3, the method 400 in FIG. 4, the method 500 in FIG. 5, the method 600 in FIG. 6, the method 700 in FIG. 7, or the method 800 in FIG. 8. In addition, units in the apparatus 900 and the foregoing other operations and/or functions are separately intended to implement corresponding procedures in the method 200 in FIG. 2, the method 300 in FIG. 3, the method 400 in FIG. 4, the method 500 in FIG. 5, the method 600 in FIG. 6, the method 700 in FIG. 7, or the method 800 in FIG. 8. It should be understood that specific processes in which the units perform the foregoing corresponding steps are described in detail in the foregoing method embodiments. For brevity, details are not described herein.

In a possible design, the apparatus 900 may be the radio frequency device in the foregoing method embodiment, or may be a chip configured to implement functions of the radio frequency device in the foregoing method embodiment.

It should be understood that the apparatus 900 may correspond to the radio frequency device in the method 200, the method 300, the method 400, the method 500, the method 600, the method 700, or the method 800 according to embodiments of this application. The apparatus 900 may include a unit configured to perform the method performed by the radio frequency device in the method 200 in FIG. 2, the method 300 in FIG. 3, the method 400 in FIG. 4, the method 500 in FIG. 5, the method 600 in FIG. 6, the method 700 in FIG. 7, or the method 800 in FIG. 8. In addition, units in the apparatus 900 and the foregoing other operations and/or functions are separately intended to implement corresponding procedures in the method 200 in FIG. 2, the method 300 in FIG. 3, the method 400 in FIG. 4, the method 500 in FIG. 5, the method 600 in FIG. 6, the method 700 in FIG. 7, or the method 800 in FIG. 8. It should be understood that specific processes in which the units perform the foregoing corresponding steps are described in detail in the foregoing method embodiments. For brevity, details are not described herein.

In another possible design, the apparatus 900 may be the control device in the foregoing method embodiment, or may be a chip configured to implement functions of the control device in the foregoing method embodiment.

It should be understood that the apparatus 900 may correspond to the control device in the method 200, the method 300, the method 400, the method 500, the method 600, the method 700, or the method 800 according to embodiments of this application. The apparatus 900 may include a unit configured to perform the method performed by the control device in the method 200 in FIG. 2, the method 300 in FIG. 3, the method 400 in FIG. 4, the method 500 in FIG. 5, the method 600 in FIG. 6, the method 700 in FIG. 7, or the method 800 in FIG. 8. In addition, units in the apparatus 900 and the foregoing other operations and/or functions are separately intended to implement corresponding procedures in the method 200 in FIG. 2, the method 300 in FIG. 3, the method 400 in FIG. 4, the method 500 in FIG. 5, the method 600 in FIG. 6, the method 700 in FIG. 7, or the method 800 in FIG. 8. It should be understood that specific processes in which the units perform the foregoing corresponding steps are described in detail in the foregoing method embodiments. For brevity, details are not described herein.

It should be further understood that the transceiver unit 910 in the apparatus 900 may correspond to the transceiver 1020 in the apparatus 1000 shown in FIG. 10, and the processing unit 920 in the apparatus 900 may correspond to the processor 1010 in the apparatus 1000 shown in FIG. 10.

It should be further understood that when the apparatus 900 is a chip, the chip includes the transceiver unit and the processing unit. The transceiver unit may be an input/output circuit or a communication interface. The processing unit may be a processor, a microprocessor, or an integrated circuit integrated on the chip.

The transceiver unit 910 is configured to implement signal receiving and sending operations of the apparatus 900, and the processing unit 920 is configured to implement a signal processing operation of the apparatus 900.

Optionally, the apparatus 900 further includes a storage unit 930. The storage unit 930 is configured to store instructions.

FIG. 10 is a schematic block diagram of an apparatus 1000 according to an embodiment of this application. As shown in FIG. 10, the apparatus 1000 includes at least one processor 1010 and a transceiver 1020. The processor 1010 is coupled to a memory, and is configured to execute instructions stored in the memory, to control the transceiver 1020 to send a signal and/or receive a signal. Optionally, the apparatus 1000 further includes a memory 1030, configured to store the instructions.

It should be understood that the processor 1010 and the memory 1030 may be integrated into one processing apparatus. The processor 1010 is configured to execute program code stored in the memory 1030, to implement the foregoing functions. During specific implementation, the memory 1030 may alternatively be integrated into the processor 1010, or may be independent of the processor 1010.

It should be further understood that the transceiver 1020 may include a receiver (or referred to as a receiver machine) and a transmitter (or referred to as a transmitter machine). The transceiver 1020 may further include one or more antennas. The transceiver 1020 may be a communication interface or an interface circuit.

When the apparatus 1000 is a chip, the chip includes a transceiver unit and a processing unit. The transceiver unit may be an input/output circuit or a communication interface. The processing unit may be a processor, a microprocessor, or an integrated circuit integrated on the chip.

FIG. 11 is a schematic diagram of a chip system according to an embodiment of this application. The chip system herein may alternatively be a system including a circuit. The chip system 1100 shown in FIG. 11 includes a logic circuit 1110 and an input/output interface (input/output interface) 1120. The logic circuit is coupled to an input interface, and communicate data (for example, first indication information) through the input/output interface, to perform the method in FIG. 2, FIG. 3, FIG. 4, FIG. 5, FIG. 6, FIG. 7, or FIG. 8.

An embodiment of this application further provides a processing apparatus, including a processor and an interface. The processor may be configured to perform the method in the foregoing method embodiment.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal (digital signal processor, DSP), a micro controller (micro controller unit, MCU), a programmable logic device (programmable logic device, PLD), or another integrated chip.

In an implementation process, steps in the foregoing method can be implemented by using a hardware integrated logical circuit in the processor, or by using instructions in a form of software. The steps of the method disclosed with reference to embodiments of this application may be directly performed by a hardware processor, or may be performed through a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiment can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general purpose processor may be a microprocessor, or the processor may be any conventional processor or the like.

It may be understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache.

According to the method provided in embodiments of this application, this application further provides a computer program product. The computer program product includes computer program code. When the computer program code is run on a computer, the computer is enabled to perform the method in any one of the embodiments shown in FIG. 2 to FIG. 8.

According to the method provided in embodiments of this application, this application further provides a computer-readable medium. The computer-readable medium stores program code. When the program code is run on a computer, the computer is enabled to perform the method in any one of the embodiments shown in FIG. 2 to FIG. 8.

According to the method provided in embodiments of this application, this application further provides a system, including the foregoing radio frequency device, extension device, and control device.

All or a part of the foregoing embodiments may be implemented by software, hardware, firmware, or any combination thereof. When the software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer instructions may be stored in a computer-readable storage medium, or transmitted from one computer-readable storage medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

In the several embodiments provided in this application, it should be understood that the disclosed system, apparatus, and method may be implemented in other manners. For example, the foregoing apparatus embodiments are merely examples. For example, the unit division is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
receiving, by an extension device, indication information from a control device, wherein the indication information indicates at least one radio frequency device that performs target uplink transmission, and the at least one radio frequency device that performs the target uplink transmission is a serving radio frequency device of at least one terminal device that performs the target uplink transmission;
receiving, by the extension device, a signal from the at least one radio frequency device that performs the target uplink transmission; and
sending, by the extension device, an uplink signal to the control device, wherein the uplink signal is determined based on the signal received from at least one radio frequency device in the at least one radio frequency device that performs the target uplink transmission.

2. The method according to claim 1, wherein the receiving, by the extension device, a signal from the at least one radio frequency device that performs the target uplink transmission comprises:
receiving, by the extension device, the signal from the at least one radio frequency device that performs the target uplink transmission and a signal from a radio frequency device that does not perform the target uplink transmission.

3. The method according to claim 1, wherein the receiving, by the extension device, a signal from the at least one radio frequency device that performs the target uplink transmission comprises:
receiving, by the extension device, only the signal from the at least one radio frequency device that performs the target uplink transmission.

4. The method according to claim 3, wherein the method further comprises:
sending, by the extension device to the at least one radio frequency device that performs the target uplink transmission, an instruction indicating to perform the target uplink transmission, and/or sending, to a radio frequency device that does not perform the target uplink transmission, an instruction indicating not to perform the target uplink transmission.

5. The method according to any one of claims 1 to 4, wherein the indication information indicates at least one radio frequency device that performs uplink transmission in at least one time unit, the at least one time unit comprises a target time unit for performing the target uplink transmission, and the at least one radio frequency device that performs the uplink transmission in the at least one time unit is a serving radio frequency device of at least one terminal device that performs the uplink transmission in the at least one time unit.

6. The method according to any one of claims 1 to 5, wherein
power of the signal received from the at least one radio frequency device in the at least one radio frequency device that performs the target uplink transmission is greater than a power threshold.

7. The method according to claim 6, wherein the method further comprises:
detecting, by the extension device, the power of the signal received from the at least one radio frequency device that performs the target uplink transmission.

8. The method according to any one of claims 1 to 7, wherein the indication information further indicates a radio frequency device that performs target downlink transmission, the radio frequency device that performs the target downlink transmission is a serving radio frequency device of a terminal device that performs the target downlink transmission, and the method further comprises:
receiving, by the extension device, a downlink signal from the control device; and
sending, by the extension device, the downlink signal to the radio frequency device that performs the target downlink transmission.

9. The method according to any one of claims 1 to 7, wherein the indication information further indicates a radio frequency device that performs target downlink transmission, the radio frequency device that performs the target downlink transmission is a serving radio frequency device of a terminal device that performs the target downlink transmission, and the method further comprises:
sending, by the extension device to the radio frequency device that performs the target downlink transmission, an instruction indicating to perform the target downlink transmission, and/or sending, to a radio frequency device that does not perform the target downlink transmission, an instruction indicating not to perform the target downlink transmission;
receiving, by the extension device, a downlink signal from the control device; and
sending, by the extension device, the downlink signal to the radio frequency device that performs the target downlink transmission.

10. The method according to claim 8 or 9, wherein the indication information further indicates at least one radio frequency device that performs downlink transmission in at least one time unit, the at least one time unit comprises a target time unit for performing the target downlink transmission, and the at least one radio frequency device that performs the downlink transmission in the at least one time unit is a serving radio frequency device of a terminal device that performs the downlink transmission in the at least one time unit.

11. A signal transmission method, comprising:
receiving, by a radio frequency device, an instruction sent by an extension device, wherein the instruction indicates whether to perform target uplink transmission; and
determining, by the radio frequency device according to the instruction, whether to perform the target uplink transmission.

12. The method according to claim 11, wherein the instruction indicates whether to perform uplink transmission in at least one time unit, and the at least one time unit comprises a target time unit for performing the target uplink transmission.

13. The method according to claim 11 or 12, wherein the radio frequency device determines, according to the instruction, not to perform the target uplink transmission, and the method further comprises:
performing, by the radio frequency device, at least one of the following: disabling an uplink radio frequency channel, disabling a power amplifier, disabling a low noise amplifier, disabling an interface between the radio frequency device and the extension device, clearing data for the interface between the radio frequency device and the extension device, and disabling a downlink radio frequency channel.

14. The method according to claim 11 or 12, wherein the radio frequency device determines, according to the instruction, to perform the target uplink transmission, and the method further comprises:
performing, by the radio frequency device, at least one of the following: enabling an uplink radio frequency channel, enabling a power amplifier, enabling a low noise amplifier, enabling an interface between the radio frequency device and the extension device, and enabling a downlink radio frequency channel.

15. The method according to claim 11 or 12, wherein the determining, according to the instruction, whether to perform the target uplink transmission comprises:
determining, based on the instruction and power of a to-be-sent signal, whether to perform the target uplink transmission; and
if the instruction indicates to perform the target uplink transmission, but the power of the to-be-sent signal is less than or equal to a power threshold, determining, by the radio frequency device, not to perform the target uplink transmission.

16. The method according to any one of claims 11 to 15, wherein the instruction further indicates whether to perform target downlink transmission, and the method further comprises:
determining, by the radio frequency device according to the instruction, whether to perform the target downlink transmission.

17. The method according to claim 16, wherein the instruction indicates whether to perform downlink transmission in at least one time unit, and the at least one time unit comprises a target time unit for performing the target uplink transmission.

18. The method according to claim 16 or 17, wherein the radio frequency device determines, according to the instruction, not to perform the target downlink transmission, and the method further comprises:
disabling, by the radio frequency device, at least one of the following: the downlink radio frequency channel, the power amplifier, the low noise amplifier, the interface between the radio frequency device and the extension device, and the uplink radio frequency channel.

19. The method according to claim 16 or 17, wherein the radio frequency device determines, according to the instruction, to perform the target downlink transmission, and the method further comprises:
enabling, by the radio frequency device, at least one of the following: the downlink radio frequency channel, the power amplifier, the low noise amplifier, the uplink radio frequency channel, and the interface between the radio frequency device and the extension device.

20. A signal transmission method, comprising:
determining, by a control device, a serving radio frequency device of at least one terminal device that performs target uplink transmission; and
sending, by the control device, indication information to an extension device, wherein the indication information indicates at least one radio frequency device that performs the target uplink transmission, and the at least one radio frequency device that performs the target uplink transmission is the serving radio frequency device of the at least one terminal device that performs the target uplink transmission.

21. The method according to claim 20, wherein the determining, by a control device, a serving radio frequency device of at least one terminal device that performs target uplink transmission comprises:
determining, by the control device, a serving radio frequency device of at least one terminal device that performs uplink transmission in at least one time unit, wherein the at least one time unit comprises a target time unit for performing the target uplink transmission; and
the indication information indicates at least one radio frequency device that performs the uplink transmission in the at least one time unit, and the at least one radio frequency device that performs the uplink transmission in the at least one time unit is the serving radio frequency device of the at least one terminal device that performs the uplink transmission in the at least one time unit.

22. The method according to claim 20 or 21, wherein the method further comprises:
determining, by the control device based on power of an uplink signal received by each radio frequency device from the terminal device that performs the target uplink transmission, the serving radio frequency device of the terminal device that performs the target uplink transmission.

23. The method according to claim 20 or 21, wherein the method further comprises:
determining, by the control device based on power of a downlink signal received from each radio frequency device by the terminal device that performs the target uplink transmission, the serving radio frequency device of the terminal device that performs the target uplink transmission.

24. The method according to any one of claims 20 to 23, wherein the method further comprises:
determining, by the control device, a serving radio frequency device of at least one terminal device that performs target downlink transmission; and
the indication information further indicates at least one radio frequency device that performs the target downlink transmission, and the at least one radio frequency device that performs the target downlink transmission is the serving radio frequency device of the at least one terminal device that performs the target downlink transmission.

25. The method according to claim 24, wherein the determining, by the control device, a serving radio frequency device of at least one terminal device that performs target downlink transmission comprises:
determining, by the control device, a serving radio frequency device of at least one terminal device that performs downlink transmission in at least one time unit, wherein the at least one time unit comprises a target time unit for performing the target downlink transmission; and
the indication information indicates at least one radio frequency device that performs the downlink transmission in the at least one time unit, and the at least one radio frequency device that performs the downlink transmission in the at least one time unit is the serving radio frequency device of the at least one terminal device that performs the downlink transmission in the at least one time unit.

26. The method according to any one of claims 20 to 25, wherein the method further comprises:
sending, by the control device, the indication information to the radio frequency device via the extension device.

27. An apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 10.

28. An apparatus, comprising at least one processor, wherein the at least one processor is coupled to at least one memory, and the at least one processor is configured to execute a computer program or instructions stored in the at least one memory, to enable the apparatus to perform the method according to any one of claims 11 to 19.

29. An apparatus, comprising at least one processor, wherein the at least one processor is coupled to at least one memory, and the at least one processor is configured to execute a computer program or instructions stored in the at least one memory, to enable the apparatus to perform the method according to any one of claims 20 to 26.

30. A system, comprising the apparatuses according to claims 27 to 29.

31. A computer-readable storage medium, wherein the computer-readable storage medium stores a computer program, and when the computer program is executed, the method according to any one of claims 1 to 26 is implemented.
